(19) Europäisches Patentamt / European Patent Office / Office européen des brevets

(11) **EP 4 503 596 A1**

(12) **EUROPEAN PATENT APPLICATION**
published in accordance with Art. 153(4) EPC

(43) Date of publication:
05.02.2025  Bulletin 2025/06

(21) Application number: 23791100.3

(22) Date of filing: 12.04.2023

(51) International Patent Classification (IPC):
*H04N 7/15* (2006.01)

(52) Cooperative Patent Classification (CPC):
H04N 5/268; H04N 7/15

(86) International application number:
PCT/CN2023/087858

(87) International publication number:
WO 2023/202445 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  20.04.2022  CN 202210415946

(71) Applicant: Huawei Technologies Co., Ltd.
Shenzhen, Guangdong 518129 (CN)

(72) Inventors:
• HU, Bin
  Shenzhen, Guangdong 518129 (CN)
• XU, Zhaocheng
  Shenzhen, Guangdong 518129 (CN)

(74) Representative: Huawei European IPR
Huawei Technologies Duesseldorf GmbH
Riesstraße 25
80992 München (DE)

(54) **DEMONSTRATION SYSTEM, METHOD, GRAPHICAL INTERFACE, AND RELATED APPARATUS**

(57)     This application discloses a communication system. The communication system relates to a primary device and a secondary device. The primary device can obtain multimedia content that needs to be displayed in a conference process, and determine, in a real environment, a location of a virtual screen for playing the multimedia content. After the primary device starts a conference, the secondary device can obtain the multimedia content, and display the multimedia content at a specified location of a display based on the location of the virtual screen. When a user views the multimedia content on the secondary device, the multimedia content is superimposed on the location, determined by the primary device, of the virtual screen in the real environment. That is, when the user needs to hold the conference, the user does not need to consider whether there is a device for playing the multimedia content in a conference site, and the user can specify a location in any site and view, on the device, the multimedia content displayed at the location. Therefore, the conference is held without being limited by the environment and the device, and user's conference experience is improved.

FIG. 1

## Description

This application claims priority to Chinese Patent Application No. 202210415946.9, filed with the China National Intellectual Property Administration on April 20, 2022 and entitled "COMMUNICATION SYSTEM, PRESENTATION METHOD, GRAPHICAL INTERFACE, AND RELATED APPARATUS", which is incorporated herein by reference in its entirety.

## TECHNICAL FIELD

This application relates to the field of terminals and communication technologies, and in particular, to a communication system, a presentation method, a graphical interface, and a related apparatus.

## BACKGROUND

As computer technologies continuously develop, people's working manner has been innovatively changed. For example, during a conference, a speaker may display conference content on a display device or a projection device, to help participants more clearly understand the content described by the speaker. However, because the current conference needs the display device or the projection device to display the conference content, a conference site is greatly limited. Therefore, how to reduce a limitation of the conference site and improve user's conference experience is an urgent problem to be resolved currently.

## SUMMARY

This application provides a communication system, a presentation method, a graphical interface, and a related apparatus, to introduce augmented reality into a conference scenario. Therefore, a conference is held without limitations of an environment and a device, conference content is not easily leaked, and user's conference experience is improved.
According to a first aspect, an embodiment of this application provides a communication system. The system may include a first device and a second device. The first device may receive a first operation; the first device may display first content in response to the first operation; the second device obtains the first content when the second device is within a preset range of a first location, where the first location is a location, in a physical space, determined by the first device; and the second device may display the first content in a superimposing manner on an image captured by a camera in real time, where a display location of the first content in the image overlaps the first location in the image; or the second device may project the first content onto a retina of a user via a lens of the second device, so that the first content is superimposed on the first location viewed by the user via the lens.
The first content may include visual content such as a video, a picture, a text, a photo, and a chart, and the content may be represented as two-dimensional planar content and/or three-dimensional stereoscopic content. It can be learned that multimedia content in a plurality of representation forms can enrich display effect of conference content.
According to the system provided in the first aspect, the first device, namely, a primary device carried by a speaker, can randomly select a location in a real environment to display multimedia content required by a conference. When viewing the real environment on the second device, namely, a secondary device carried by a participant, a user can view the multimedia content superimposed on the location determined by the primary device.
It can be learned that, in the system, augmented reality enters a conference scenario, and the user can specify a virtual screen in any site to display the multimedia content that needs to be displayed in the conference, so that a conference site is not limited by a display device, and the user can view both a picture in the real environment and the virtual multimedia content. In addition, the system enables the secondary device to display the multimedia content only when the secondary device is close to the virtual screen, to ensure that the secondary device cannot view the conference content when the secondary device is not in the conference site, and avoid a waste of system resources by the secondary device. In addition, this also enables the conference more secure and private, and does not easily disclose the conference content.
With reference to the first aspect, in a possible implementation, the system further includes a server, and before the second device obtains the first content when the second device is within the preset range of the first location, the first device sends indication information of the first content to the server. The second device receives a second operation, and sends a location of the second device to the server; the server determines, based on the location of the second device, that the second device is within the preset range of the first location, and sends the indication information to the second device; and the second device obtains the first content based on the indication information.
The system may relate to the primary device, the secondary device, and the server. The primary device can send the multimedia content to the secondary device via the server. In this way, when the primary device is far away from the secondary device, the primary device can perform a remote conference, and the primary device and the secondary device can perform data forwarding via the server.

With reference to the first aspect, in a possible implementation, the second device receives a second operation, and sends a location of the second device to the first device; the first device determines, based on the location of the second device, that the second device is within the preset range of the first location, and sends indication information to the second device; and the second device obtains the first content based on the indication information.

The system may relate to only the primary device and the secondary device. In a process of holding the conference, the primary device can implement direct communication with the secondary device. This avoids forwarding of a third-party device, accelerates data transmission, synchronizes the multimedia content viewed by the speaker and the participant as much as possible, and improves user's conference experience.

With reference to the first aspect, in a possible implementation, after the first device displays the first content, the first device receives a third operation on the first content; and in response to the third operation, the first device performs a fourth operation on the first content, where the fourth operation includes any one of the following: switching a display picture of the first content, ending displaying the first content, pausing playing the first content, or starting playing the first content.

That is, in addition to displaying the multimedia content, the primary device may further receive a user operation to change the displayed multimedia content. This improves operability of the conference content. For example, the multimedia content is a presentation. The primary device may switch between a previous slide and a next slide of the presentation based on the user operation, pause or start playing a slide, end playing the slide, or the like.

With reference to the first aspect, in a possible implementation, after the second device displays the first content in the superimposing manner on the image captured by the camera in real time, or after the second device projects the first content onto the retina of the user via the lens of the second device, the first device sends, to the second device, first information indicating the third operation; and the second device performs the fourth operation on the first content.

In a process in which the primary device changes, following the user operation, the displayed multimedia content, the secondary device may also synchronously change, following the user operation, the displayed multimedia content. This can ensure that in the conference process, the participant can view changed multimedia content of the speaker.

With reference to the first aspect, in a possible implementation, when the second device is within the preset range of the first location, the first device sends, to the second device, the first information indicating the third operation.

When the primary device changes the displayed multimedia content, the primary device may synchronously change, when determining that the secondary device is located in a preset range, the multimedia content displayed on the secondary device. This can avoid that the multimedia content displayed on the secondary device is still changed with the primary device after the secondary device is far away from the conference site, improve conference security, and save system resources.

With reference to the first aspect, in a possible implementation, the first location includes one or more locations, and the second device includes one or more devices.

That the first location includes one or more locations means that a quantity of virtual screens is not limited. The primary device can determine a plurality of virtual screens, the secondary device can view the multimedia content displayed on the plurality of virtual screens, and the participant can adjust a view angle based on a requirement of the participant. This enhances conference interest and user's view effect. That the second device includes one or more devices means that a quantity of secondary devices is not limited. In the conference process, the one or more secondary devices can view the multimedia content displayed on the primary device at the one or more locations.

With reference to the first aspect, in a possible implementation, the first location is a location obtained when the first device or a third device starts positioning, and the third device is a device that is in the physical space and that is different from the first device or the second device; or the first location is a location pre-stored in the first device or the server.

That is, when determining a location of the virtual screen, the primary device may directly start positioning, and determine a location of the primary device as the location of the virtual screen. In this way, the primary device can randomly select a location in the real environment to display the multimedia content. Further, the primary device may determine a location of another device as the location of the virtual screen. In this way, when the primary device does not have a positioning capability or is inconvenient to move, the primary device can specify the location of the another device in the real environment as the location of the virtual screen. Alternatively, the primary device may directly select the location of the virtual screen from one or more pre-stored locations. This can reduce a trouble of real-time positioning of the primary device, and when the conference is a remote conference, the primary device can also conveniently and quickly determine the location of the virtual screen.

With reference to the first aspect, in a possible implementation, before the second device displays the first content in the superimposing manner on the image captured by the camera in real time, or before the second device projects the first content onto the retina of the user via the lens of the second device, the second device displays first prompt information, where the first prompt information indicates the second device to deflect toward a first direction, and the first direction points from the second device to the first location.

When the participant views the multimedia content on the secondary device, because the participant may not know the location of the virtual screen before viewing the multimedia content, the secondary device may output prompt information to indicate the participant how to move the secondary device, so that the participant can quickly find the location of the virtual screen and view the multimedia content as soon as possible.

With reference to the first aspect, in a possible implementation, the first device and the second device are located in a same physical space, or the first device and the second device are located in different physical spaces.

It can be learned that, when the primary device and the secondary device are located in a same physical space, the conference initiated by the primary device may be an on-site conference. In this way, the participant can not only view the multimedia content, but also see a speech action of the speaker, and the like. When the primary device and the secondary device are located in different physical spaces, the conference initiated by the primary device may be a remote conference. In this way, the conference can be held without a limitation of a physical distance between the primary device and the secondary device, and the primary device can remotely display the multimedia content. In addition, further, when there are a plurality of secondary devices, the secondary devices may also be located in a same physical space or different physical spaces, and the participants can be gathered together or distributed in different places. This weakens a limitation of the conference site and provides convenience for the user to hold the conference.

According to a second aspect, an embodiment of this application provides a presentation method. The method is applied to a first device, and the method includes: The first device may receive a first operation; the first device may display first content in response to the first operation; and the first device may send the first content to a second device when the second device is within a preset range of a first location, where the first location is a location, in a physical space, determined by the first device.

The first content may include visual content such as a video, a picture, a text, a photo, and a chart, and the content may be represented as two-dimensional planar content and/or three-dimensional stereoscopic content. It can be learned that multimedia content in a plurality of representation forms can enrich display effect of conference content.

According to the method provided in the second aspect, the first device, namely, a primary device carried by a speaker, can randomly select a location in a real environment to display multimedia content required by a conference. In this way, the user can specify, without considering whether a display device is equipped with for playing the multimedia content viewed by a conference participant in a conference site, a virtual screen in any site to display the multimedia content required to be displayed in the conference. In addition, the second device, namely, a secondary device carried by the participant, can obtain the multimedia content only when the second device is close to the virtual screen, to ensure that the secondary device cannot view the conference content when the secondary device is not in the conference site, and avoid a waste of system resources by the secondary device. In addition, this also enables the conference more secure and private, and does not easily disclose the conference content.

With reference to the second aspect, in a possible implementation, that the first device sends the first content to a second device when the second device is within a preset range of a first location specifically includes: The first device sends indication information of the first content to a server, so that the server sends the indication information to the second device when the second device is within the preset range of the first location, where the indication information is used by the second device to obtain the first content; or the first device obtains a location of the second device; and the first device determines, based on the location of the second device, that the second device is within the preset range of the first location, and sends the indication information to the second device.

That is, in a conference process, the primary device can implement indirect communication with the secondary device via the server, and send the multimedia content to the secondary device via the server. In this way, when the primary device is far away from the secondary device, the primary device can perform data forwarding via the server, and successfully hold a remote conference. Alternatively, the primary device can implement direct communication with the secondary device. This avoids forwarding of a third-party device, accelerates data transmission, synchronizes the multimedia content viewed by the speaker and the participant as much as possible, and improves user's conference experience.

With reference to the second aspect, in a possible implementation, after the first device displays first content, the method further includes: The first device receives a third operation on the first content; and in response to the third operation, the first device performs a fourth operation on the first content, where the fourth operation includes any one of the following: switching a display picture of the first content, ending displaying the first content, pausing playing the first content, or starting playing the first content.

That is, in addition to displaying the multimedia content, the primary device may further receive a user operation to change the displayed multimedia content. This improves operability of the conference content. For example, the multimedia content is a presentation. The primary device may switch between a previous slide and a next slide of the presentation based on the user operation, pause or start playing a slide, end playing the slide, or the like.

With reference to the second aspect, in a possible implementation, the method further includes: The first device sends to the second device, first information indicating the third operation.

That is, in a process in which the primary device changes, following the user operation, the displayed multimedia content, the primary device may further notify the secondary device of the change process, so that the secondary device synchronously changes the displayed multimedia content.

With reference to the second aspect, in a possible implementation, that the first device sends to the second device, first information indicating the third operation specifically includes: When the second device is within the preset range of the first location, the first device sends, to the second device, the first information indicating the third operation.

When the primary device changes the displayed multimedia content, the primary device may notify the secondary device of the change process when determining that the secondary device is within the preset range. This improves conference security, and saves system resources.

With reference to the second aspect, in a possible implementation, the first location includes one or more locations, and the second device includes one or more devices.

That the first location includes one or more locations means that a quantity of virtual screens is not limited. The primary device can determine a plurality of virtual screens, the secondary device can view the multimedia content displayed on the plurality of virtual screens, and the participant can adjust a view angle based on a requirement of the participant. This enhances conference interest. That the second device includes one or more devices means that a quantity of secondary devices is not limited. In the conference process, the one or more secondary devices can view the multimedia content displayed on the primary device at the one or more locations.

With reference to the second aspect, in a possible implementation, the first location is a location obtained when the first device or a third device starts positioning, and the third device is a device that is in the physical space and that is different from the first device or the second device; or the first location is a location pre-stored in the first device or the server.

That is, when determining a location of the virtual screen, the primary device may directly start positioning, and determine a location of the primary device as the location of the virtual screen. In this way, the primary device can randomly select a location in the real environment to display the multimedia content. Further, the primary device may determine a location of another device as the location of the virtual screen. In this way, when the primary device does not have a positioning capability or is inconvenient to move, the primary device can specify the location of the another device in the real environment as the location of the virtual screen. Alternatively, the primary device may directly select the location of the virtual screen from one or more pre-stored locations. This can reduce a trouble of real-time positioning of the primary device, and when the conference is a remote conference, the primary device can also conveniently and quickly determine the location of the virtual screen.

With reference to the second aspect, in a possible implementation, the first device and the second device are located in a same physical space, or the first device and the second device are located in different physical spaces.

It can be learned that, when the primary device and the secondary device are located in a same physical space, the conference initiated by the primary device may be an on-site conference. In this way, the participant can not only view the multimedia content, but also see a speech action of the speaker and hear a voice of the speaker, and the like. When the primary device and the secondary device are located in different physical spaces, the conference initiated by the primary device may be a remote conference. In this way, the conference can be held without a limitation of a physical distance between the primary device and the secondary device, and the primary device can remotely display the multimedia content. In addition, further, when there are a plurality of secondary devices, the secondary devices may also be located in a same physical space or different physical spaces, and the participants can be gathered together or distributed in different places. This weakens a limitation of the conference site and provides convenience for the user to hold the conference.

According to a third aspect, an embodiment of this application provides a presentation method. The method is applied to a second device, and the method includes: The second device may obtain, when the second device is within a preset range of a first location, first content to be displayed on a first device, where the first location is a location, in a physical space, determined by the first device; and the second device may display the first content in a superimposing manner on an image captured by a camera in real time, where a display location of the first content in the image overlaps the first location in the image; or the second device may project the first content onto a retina of a user via a lens of the second device, so that the first content is superimposed on the first location viewed by the user via the lens.

The first content may include visual content such as a video, a picture, a text, a photo, and a chart, and the content may be represented as two-dimensional planar content and/or three-dimensional stereoscopic content. It can be learned that multimedia content in a plurality of representation forms can enrich display effect of conference content.

According to the method provided in the third aspect, the first device, namely, a primary device carried by a speaker, can randomly select a location in a real environment to display multimedia content required by a conference. When viewing the real environment on the second device, namely, a secondary device carried by a participant, a user can view the multimedia content superimposed on a virtual screen determined by the primary device. In this way, the conference hold by the user can be not limited by an environment or a device, and the participant can view, on the secondary device, the multimedia content displayed in the real environment. This implements application of augmented reality in a conference scenario, and provides a new conference form for holding the conference. In addition, the method enables the secondary device to display the multimedia content only when the secondary device is close to the virtual screen, to ensure that the secondary device cannot view conference content when the secondary device is not in a conference site, and avoid a waste of system resources by the secondary device. In addition, this also enables the conference more secure and private, and does not easily disclose the conference content.

With reference to the third aspect, in a possible implementation, that the second device obtains first content when the second device is within a preset range of a first location specifically includes: The second device receives a second operation, and sends a location of the second device to a server; and when the second device is within the preset range of the first location, the second device obtains indication information sent by the server; or the second device receives the second operation, and sends the location of the second device to the first device; and when the second device is within the preset range of the first location, the second device obtains the indication information sent by the first device; and the second device obtains the first content based on the indication information.

That is, when the secondary device is close to the virtual screen, the secondary device can directly obtain the multimedia content on the primary device, or can indirectly obtain, through data forwarding via the server, the multimedia content determined by the primary device. Direct communication between the secondary device and the primary device can avoid forwarding of a third-party device, accelerate data transmission, and synchronize the multimedia content viewed by the speaker and the participant as much as possible. When the secondary device is far away from the primary device, remote communication can still be implemented through forwarding via the server, so that the conference is held without a limitation of a distance between the primary device and the secondary device.

With reference to the third aspect, in a possible implementation, after the second device displays the first content in the superimposing manner on the image captured by the camera in real time, or after the second device projects the first content onto the retina of the user via the lens of the second device, the method further includes: The second device obtains first information, indicating a third operation, sent by the first device, where the third operation is an operation, on the first content, received by the first device; and the second device performs a fourth operation on the first content, where the fourth operation includes any one of the following: switching a display picture of the first content, ending displaying the first content, pausing playing the first content, or starting playing the first content.

That is, in a process in which the primary device controls the multimedia content based on a user operation, the primary device can notify the secondary device of the user operation, and the secondary device can control, based on the user operation, the multimedia content displayed on the secondary device. For example, the multimedia content is a presentation. The secondary device may switch between a previous slide and a next slide of the presentation based on the user operation, pause or start playing a slide, end playing the slide, or the like.

With reference to the third aspect, in a possible implementation, that the second device obtains first information sent by the first device specifically includes: When the second device is within the preset range of the first location, the second device obtains the first information sent by the first device.

That is, only when the secondary device is close to the virtual screen, the secondary device can control the multimedia content based on the user operation performed by the user on the primary device. This can avoid that the multimedia content displayed on the secondary device is still changed with the primary device after the secondary device is far away from the conference site, improve conference security, and save system resources.

With reference to the third aspect, in a possible implementation, the first location includes one or more locations, and the second device includes one or more devices.

That the first location includes one or more locations means that a quantity of virtual screens is not limited. The primary device can determine a plurality of virtual screens, the secondary device can view the multimedia content displayed on the plurality of virtual screens, and the participant can adjust a view angle based on a requirement of the participant. This enhances conference interest. That the second device includes one or more devices means that a quantity of secondary devices is not limited. In the conference process, the one or more secondary devices can view the multimedia content displayed on the primary device at the one or more locations.

With reference to the third aspect, in a possible implementation, the first location is a location obtained when the first device or a third device starts positioning, and the third device is a device that is in the physical space and that is different from the first device or the second device; or the first location is a location pre-stored in the first device or the server.

That is, when determining a location of the virtual screen, the primary device may directly start positioning, and determine a location of the primary device as the location of the virtual screen. In this way, the primary device can randomly select a location in the real environment to display the multimedia content. Further, the primary device may determine a location of another device as the location of the virtual screen. In this way, when the primary device does not have a positioning capability or is inconvenient to move, the primary device can specify the location of the another device in the real environment as the location of the virtual screen. Alternatively, the primary device may directly select the location of the virtual screen from one or more pre-stored locations. This can reduce a trouble of real-time positioning of the primary device, and when the conference is a remote conference, the primary device can also conveniently and quickly determine the location of the virtual screen.

With reference to the third aspect, in a possible implementation, before the second device displays the first content in the superimposing manner on the image captured by the camera in real time, or before the second device projects the first content onto the retina of the user via the lens of the second device, the method further includes:

The second device displays first prompt information, where the first prompt information indicates the second device to deflect toward a first direction, and the first direction points from the second device to the first location.

When the participant views the multimedia content on the secondary device, because the participant may not know the location of the virtual screen before viewing the multimedia content, the secondary device may output prompt information to indicate the participant how to move the secondary device, so that the participant can quickly find the location of the virtual screen and view the multimedia content as soon as possible.

With reference to the third aspect, in a possible implementation, the first device and the second device are located in a same physical space, or the first device and the second device are located in different physical spaces.

It can be learned that, when the primary device and the secondary device are located in a same physical space, the conference initiated by the primary device may be an on-site conference. In this way, the participant can not only view the multimedia content, but also see a speech action of the speaker, and the like. When the primary device and the secondary device are located in different physical spaces, the conference initiated by the primary device may be a remote conference. In this way, the conference can be held without a limitation of a physical distance between the primary device and the secondary device, and the primary device can remotely display the multimedia content. In addition, further, when there are a plurality of secondary devices, the secondary devices may also be located in a same physical space or different physical spaces, and the participants can be gathered together or distributed in different places. This weakens a limitation of the conference site and provides convenience for the user to hold the conference.

According to a fourth aspect, an embodiment of this application provides an electronic device, including a memory, one or more processors, and one or more programs. When the one or more processors execute the one or more programs, the electronic device is enabled to implement the method according to any one of the second aspect or the implementations of the second aspect.

According to a fifth aspect, an embodiment of this application provides an electronic device, including a memory, one or more processors, and one or more programs. When the one or more processors execute the one or more programs, the electronic device is enabled to implement the method according to any one of the third aspect or the implementations of the third aspect.

According to a sixth aspect, an embodiment of this application provides a computer-readable storage medium, including instructions. When the instructions are run on an electronic device, the electronic device is enabled to perform the method according to any one of the second aspect or the implementations of the second aspect, or any one of the third aspect or the implementations of the third aspect.

According to a seventh aspect, an embodiment of this application provides a computer program product. When the computer program product runs on a computer, the computer is enabled to perform the method according to any one of the second aspect or the implementations of the second aspect, or any one of the third aspect or the implementations of the third aspect.

According to the technical methods provided in embodiments of this application, augmented reality can enter the conference scenario. Regardless of the remote conference or the on-site conference, the conference site is not limited by the environment or the device. The user can specify a location in the real environment, and view, when viewing the real environment on a device carried by the user, like a mobile phone or AR glasses, the multimedia content displayed at the specified location.

## BRIEF DESCRIPTION OF DRAWINGS

FIG. 1 is a diagram of a scenario according to an embodiment of this application;
FIG. 2 is a diagram of a structure of a communication system according to an embodiment of this application;
FIG. 3A to FIG. 3F and FIG. 4A to FIG. 4D show some user interfaces according to embodiments of this application;
FIG. 5 is a diagram of an image layer superimposition principle according to an embodiment of this application;
FIG. 6 is a schematic flowchart of a presentation method according to an embodiment of this application;
FIG. 7 is a schematic flowchart of a presentation method according to an embodiment of this application;
FIG. 8 is a diagram of a structure of an octree according to an embodiment of this application;
FIG. 9 is a schematic flowchart of a presentation method according to an embodiment of this application;
FIG. 10A and FIG. 10B are a schematic flowchart of another presentation method according to an embodiment of this application;
FIG. 11 is a diagram of a structure of a presentation apparatus according to an embodiment of this application;
FIG. 12 is a diagram of a hardware structure of an electronic device according to an embodiment of this application;
FIG. 13 is a diagram of a software structure of an electronic device according to an embodiment of this application; and
FIG. 14 is a diagram of a hardware structure of another electronic device according to an embodiment of this application.

## DESCRIPTION OF EMBODIMENTS

Technical solutions according to embodiments of this application are clearly and completely described below with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). The interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display of the electronic device.

Embodiments of this application provide a presentation method. The method relates to a primary device and a secondary device. The primary device can obtain multimedia content, and determine, in a real environment, a location of a virtual screen for playing the multimedia content. In response to an operation of starting a conference by a user, when a distance between the secondary device and the virtual screen is less than or equal to a preset value, the secondary device obtains the multimedia content, and displays the multimedia content at a specified location of a display based on the location of the virtual screen. In this case, when the user views the multimedia content on the secondary device, the multimedia content is superimposed on the location, determined by the primary device, of the virtual screen in the real environment.

It can be learned that, in the method, augmented reality is integrated into a conference scenario, so that a conference site is not limited by a display device. The user can specify a virtual screen in any site to display the multimedia content that needs to be displayed in the conference, so that the user can view both a picture in the real environment and the virtual multimedia content.

The multimedia content is conference content that needs to be displayed to a participant of the conference and that is in the conference, and may include but is not limited to visual content such as a video, a picture, a text, a photo, and a chart, and the content may be represented as two-dimensional planar content and/or three-dimensional stereoscopic content. It can be learned that multimedia content in a plurality of representation forms can enrich display effect of conference content.

The primary device may be an electronic device like a mobile phone, a computer, or a tablet. A speaker of the conference may start the conference on the primary device, display the multimedia content, and control playing, pausing, switching, and the like of the multimedia content.

The secondary device may be a device having a camera and a display, like a mobile phone, a computer, or a tablet. In this way, the secondary device can superimpose the multimedia content on an image captured by the camera in real time, so that the participant can view both the real environment and the multimedia content on the display. Alternatively, the secondary device may be an augmented reality (Augmented Reality) device, and include AR glasses, an AR head mounted device, and the like. In this way, when viewing the real environment via an AR device, the participant can view the multimedia content displayed on the specified virtual screen in the real environment. In this way, although there is no display device or projection device in the real environment to uniformly display the multimedia content that all participants need to view, the primary device can set the location of the virtual screen, so that the users can view the multimedia content on the secondary devices owned by the respective users. This makes the user feel that the multimedia content is displayed in the real world, and provides a new conference form for holding the conference.

In conclusion, according to the method provided in embodiments of this application, the conference hold by the user is not limited by the environment or the device. For example, the speaker and the participant each can carry only one mobile phone, the speaker can randomly select a location in the real environment to display the multimedia content required by the conference, and the participant can view, on the mobile phone, the real environment collected by the camera and the multimedia content provided by the speaker. In addition, the multimedia content can include two-dimensional and three-dimensional content, so that virtual reality and mixed reality are introduced into the conference scenario. This provides richer conference content for the user, makes the conference more vivid and interesting, and improves user's conference experience. Further, the method enables the secondary device to display the multimedia content only when the secondary device is close to the virtual screen, to ensure that the secondary device cannot view conference content when the secondary device is not in a conference site, and avoid a waste of system resources by the secondary device. In addition, this also enables the conference more secure and private, and does not easily disclose the conference content.

To better understand this solution, an application scenario related to the presentation method provided in embodiments of this application is first briefly described.

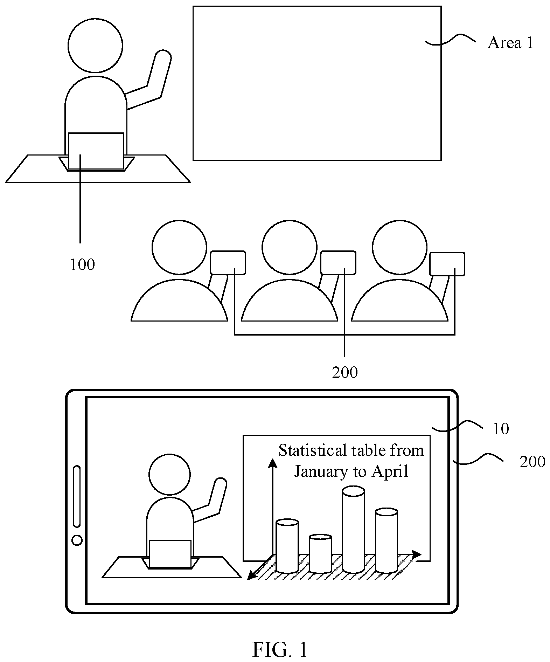

FIG. 1 shows an application scenario related to a presentation method according to an embodiment of this application. As shown in FIG. 1, the application scenario may be a conference scenario including a primary device 100 and secondary devices 200. In the conference scenario, a user using the primary device 100 may be referred to as a speaker, and users using the secondary devices 200 may be referred to as participants. The speaker may provide multimedia content for the participants, and explain conference content to the participants.

In addition, in a real environment shown in the application scenario, there is an area 1, where the area 1 may be a blackboard, a wall, or the like in the real environment. The speaker may specify, on the primary device 100, the area 1 as a virtual screen. In a process of the speaker explaining the conference content, the participants may view, on the secondary devices 200, the multimedia content provided by the speaker in the area 1. For example, the secondary device 200 may be a mobile phone shown in FIG. 1. When the participant faces a camera of the secondary device 200 toward the area 1, content displayed by the secondary device 200 may be a user interface 10 shown in FIG. 1. The user interface 10 displays an image that is captured by the camera in real time and that includes the speaker and an area 1, and further displays, in a superimposing manner in the area 1, the multimedia content provided by the speaker.

In addition, when the participant moves the secondary device 200, the area 1 in the image captured by the camera moves leftward, and the multimedia content also moves leftward synchronously with movement of the area 1 and is always located in the area 1. This provides effect that the multimedia content is displayed in the area 1 in the real environment for the participant.

In addition, when the participant views the multimedia content on the secondary device 200, the participant may adjust an orientation and/or a focal length of the camera, so that the content displayed by the secondary device 200 can include both the multimedia content and the speaker. In this way, the participant can view, on the secondary device 200, both the multimedia content displayed by the speaker and the speaker. This avoids frequent switching of view angles by the participant to view the speaker and the multimedia content. Alternatively, the participant may adjust the orientation and/or the focal length of the camera, so that the content displayed by the secondary device 200 includes only the multimedia content. In this way, when the participant needs to carefully view the multimedia content, the participant can obtain a browsing angle only for the multimedia content, to help the participant view clearer multimedia content and obtain details of the multimedia content.

It can be learned from comparison between the area 1 in the real environment and the area 1 in the user interface 10 that, although the multimedia content is not displayed in the area 1 in the real environment, the participant can view, on the secondary device 200, the multimedia content displayed in the area 1. That is, there is no need to dispose a display device or a projection device in the area 1, and the participant can also view the multimedia content in the area 1 on a virtual screen. Therefore, in an actual conference process, the speaker can quickly hold the conference anytime and anywhere without considering a limitation of a conference site. This provides a more vivid and interesting conference experience for the user.

It may be understood that an application scenario of the presentation method provided in this embodiment of this application is not limited to the application scenario described in FIG. 1. For example, the presentation method may be applied to a teaching scenario, where a teacher provides courseware for students to view during teaching, or may be applied to a publicity scenario, where a promoter provides a product material for a customer to view during product promotion, or may be applied to an exhibition scenario, where an organizer provides an exhibit introduction of an exhibit for a visitor to view in an exhibition, or the like. An application scenario of the presentation method is not limited in embodiments of this application.

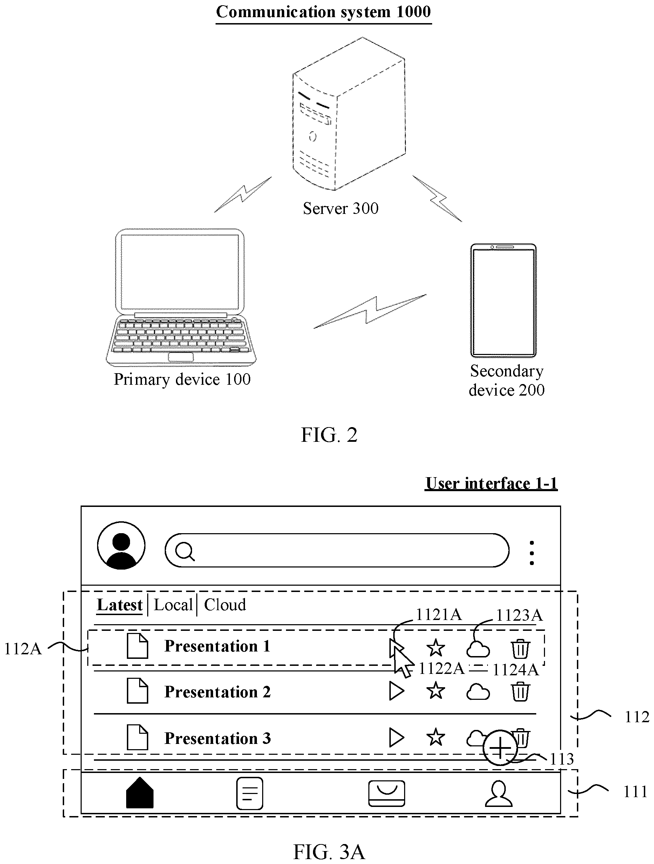

FIG. 2 shows a communication system 1000 according to an embodiment of this application.

As shown in FIG. 2, the communication system 1000 may include a primary device 100 and a secondary device 200. There may be one primary device 100, and there may be one or more secondary devices 200.

The primary device 100 may obtain multimedia content, and determine, in a real environment, a location of a virtual screen for playing the multimedia content. In addition, the primary device 100 may further receive an operation of starting a conference by a user, and display the multimedia content in response to the operation. When a distance between the secondary device 200 and the virtual screen is less than or equal to a preset value, the primary device 100 may send the displayed multimedia content to the secondary device 200. Further, the primary device 100 may further receive an operation performed by the user on the multimedia content, and trigger playing, pausing, ending, or switching of the multimedia content. In addition, the primary device 100 may further send the operation to the secondary device 200, and trigger the secondary device 200 to play, pause, end, or switch the multimedia content.

The secondary device 200 may receive an operation of joining the conference by the user, send location information of the secondary device to the primary device 100, receive the multimedia content and location information of the virtual screen that are sent by the primary device 100, and display, based on the location of the virtual screen, the multimedia content at a specified location of a display. In addition, the secondary device 200 may further receive indication information of the operation performed by the user on the multimedia content displayed on the primary device 100, and synchronously change the displayed multimedia content.

In some embodiments, the communication system 1000 may further include a server 300. The server 300 may be configured to forward communication information between the primary device 100 and the secondary device 200, where the communication information includes the multimedia content, the location information of the virtual screen, and the like. Further, the server 300 may be configured to store data including the multimedia content, the location information of the virtual screen, and the like. In this way, the primary device 100 and the secondary device 200 can obtain the multimedia content via the server 300, and the primary device 100 can further select one piece of location information from the location information of the virtual screen stored in the server 300 as location information of a virtual screen for displaying the multimedia content in the current conference. In addition, the server 300 may further determine, based on the location information of the virtual screen and the location information of the secondary device 200, whether the secondary device 200 is within a preset range. When the secondary device 200 is within the preset range, the server 300 sends, to the secondary device 200, the multimedia content or indication information of a multimedia content change operation received by the primary device 100, so that the secondary device 200 displays the multimedia content and changed multimedia content.

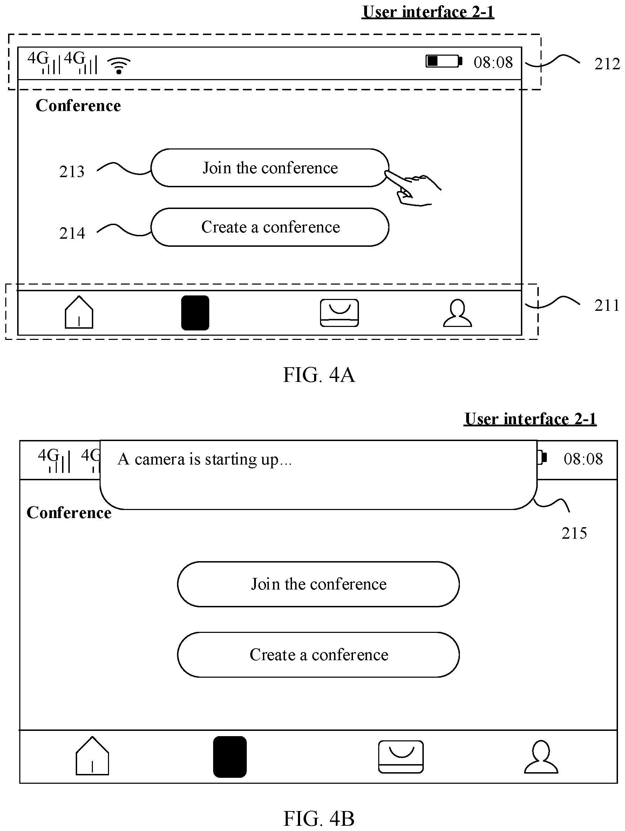

Some user interfaces provided in embodiments of this application are described below with reference to FIG. 3A to FIG. 3F and FIG. 4A to FIG. 4D. FIG. 3A to FIG. 3F show some user interfaces provided by the primary device 100, and FIG. 4A to FIG. 4D show some user interfaces provided by the secondary device 200. It should be noted that in FIG. 3A to FIG. 3F and FIG. 4A to FIG. 4D, descriptions are provided by using an example in which the primary device 100 is a computer and the secondary device 200 is a mobile phone. In another embodiment of this application, the primary device 100 and the secondary device 200 may alternatively be other electronic devices. This is not limited herein.

FIG. 3A shows a user interface 1-1 related when the primary device 100 is configured to trigger playing of the multimedia content. As shown in FIG. 3A, the user interface 1-1 may include a menu bar 111, a content display area 112, and an add icon 113. The menu bar 111 may include one or more options, and the one or more options may receive user operations. Different application pages are displayed in the user interface 1-1. For example, the one or more options may include a home page option, a conference option, an application option, a local option, and the like.

The home page option may be used to trigger displaying of one or more pieces of multimedia content. The conference option may be used to: trigger joining of a conference, and obtain and display multimedia content output by another device. The application option may be used to trigger displaying of one or more application functions. The local option may be used to trigger displaying of related information of a local account, where the related information includes a user name, a user profile picture, and the like. For example, the user interface 1-1 shown in FIG. 3A may be an application page displayed on the primary device 100 when the home page option is in a selected state.

The content display area 112 is configured to display options corresponding to the one or more pieces of multimedia content. The one or more pieces of multimedia content may be classified based on "Latest", "Local", and "Cloud" multimedia content. The "Latest" multimedia content may be multimedia content recently browsed on the primary device 100, the "Local" multimedia content may be multimedia content locally stored on the primary device 100, and the "Cloud" multimedia content may be multimedia content stored in a cloud server. For example, the content display area 112 may include first content 112A, where the first content 112A corresponds to one piece of multimedia content, the first content 112A may display a name of the multimedia content: "Presentation 1", and the first content 112A may further include a play icon 1121A, a favorites icon 1122A, an upload icon 1123A, and a delete icon 1124A.

The play icon 1121A may be used to trigger playing of the multimedia content corresponding to the first content 112A. Specifically, the primary device 100 may detect a user operation performed on the play icon 1121A, and in response to the operation, the primary device 100 triggers starting of a conference and displays the multimedia content. The favorites icon 1122A may be used to classify the multimedia content corresponding to the first content 112A into a favorites bar, and a user may find the multimedia content in the favorites bar. The upload icon 1123A may be used to upload the multimedia content corresponding to the first content 112A to the cloud server. When the primary device 100 locally deletes the multimedia content corresponding to the first content 112A, the primary device 100 may re-obtain the multimedia content from the cloud server. In addition, for example, when the multimedia content corresponding to the first content 112A is uploaded to the cloud server, an icon color of the upload icon 1123A may be a light color, and the primary device 100 cannot make response to a user operation performed on the upload icon 1123A. The delete icon 1124A may be used to delete the first content 112A. Herein, deleting the first content 112A may be deleting the multimedia content corresponding to the first content 112A, or may be deleting only a record of the multimedia content, and not displaying the first content 112A. The multimedia content is still stored in the primary device 100.

The add icon 113 may be used to trigger adding of multimedia content. Adding the multimedia content may include obtaining the multimedia content from another device, or producing the multimedia content on the primary device 100. When the add icon 113 is used to trigger producing of the multimedia content on the primary device 100, the primary device 100 may provide elements of a plurality of videos, pictures, texts, photos, graphs, and icons, and operation commands for adjusting these elements, such as moving, rotating, and deforming, so that the user can produce the multimedia content by adding, adjusting, and combining these elements.

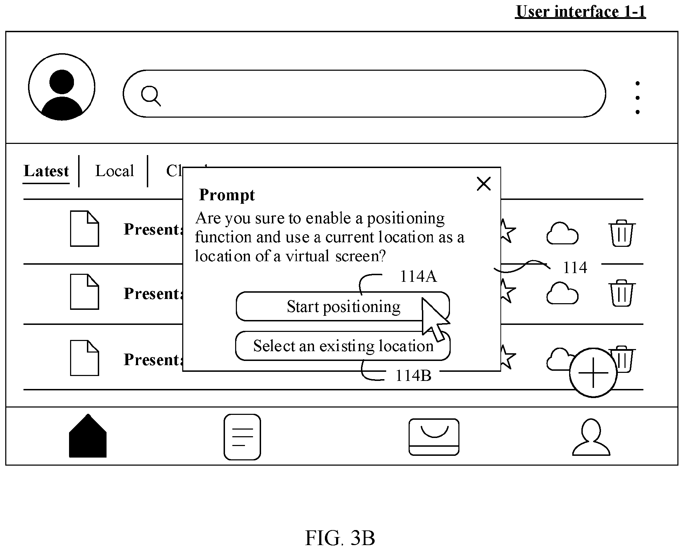

As shown in FIG. 3A, when the primary device 100 receives the user operation performed on the play icon 1121A, for example, a click operation of a cursor performed on the play icon 1121A, in response to the operation, the primary device 100 starts the conference, and displays first prompt information 114 shown in FIG. 3B in the user interface 1-1, where the first prompt information 114 indicates the user to determine a location of a virtual screen.

In some embodiments, when the multimedia content corresponding to the first content 112A is stored in the cloud server, and the primary device 100 receives the user operation performed on the play icon 1121A, the primary device 100 may first download and locally store the multimedia content, and then start playing the multimedia content, or the primary device 100 may play the multimedia content online.

As shown in FIG. 3B, the first prompt information 114 may include a first option 114A and a second option 114B. The first option 114A may be used to trigger positioning and obtain location information of the primary device 100.

The primary device 100 may use the location information as the location information of the virtual screen, so that when the user views the multimedia content on the secondary device 200, a display location of the multimedia content in a real environment is located at the location of the virtual screen. For example, if the primary device 100 starts positioning when approaching a blackboard, when the user views the multimedia content on the secondary device 200, the multimedia content is located on the blackboard.

The second option 114B may be used to trigger selecting of an existing location as the location of the virtual screen, where the existing location may be one or more locations pre-stored in the primary device 100, or may be one or more locations stored in the cloud server. For example, if the primary device 100 has historically set the location of the virtual screen in a conference room A, when the primary device 100 starts a conference in the conference room A again, the primary device 100 may directly use the historically stored location corresponding to the conference room A as the location of the virtual screen. For another example, the cloud server may pre-store some available locations, for example, include locations in a conference room A, a conference room B, and a conference room C. These locations may be locations that have been used by the primary device and/or another device when conferences are held in these locations. In this case, the primary device 100 may directly select a location from the locations for use. This may reduce user operations and help the user start the conference as soon as possible.

It may be understood that, in addition to a manner in which the primary device 100 starts positioning or selects the location from the existing location to determine the location of the virtual screen, another manner of determining the location of the virtual screen may be included. For example, the primary device 100 may send a positioning request to another device, to request to obtain location information of the another device, and use the location of the device as the location of the virtual screen. A manner in which the primary device determines the location of the virtual screen is not limited in embodiments of this application.

As shown in FIG. 3B, when the primary device 100 receives a user operation performed on the first option 114A, for example, a click operation of the cursor performed on the first option 114A, in response to the operation, the primary device 100 enables a positioning function, for example, GPS positioning, to obtain longitude, latitude, and altitude of the current location of the primary device 100.

It may be understood that, before the primary device 100 starts the positioning function, a speaker may move the primary device 100 to the selected location of the virtual screen, and start positioning, so as to determine the location of the virtual screen based on the current location of the primary device 100. Alternatively, when the primary device 100 is difficult to move or does not have the positioning function, the speaker may directly select one location from the existing locations as the location of the virtual screen. This reduces a trouble of manual positioning by the user.

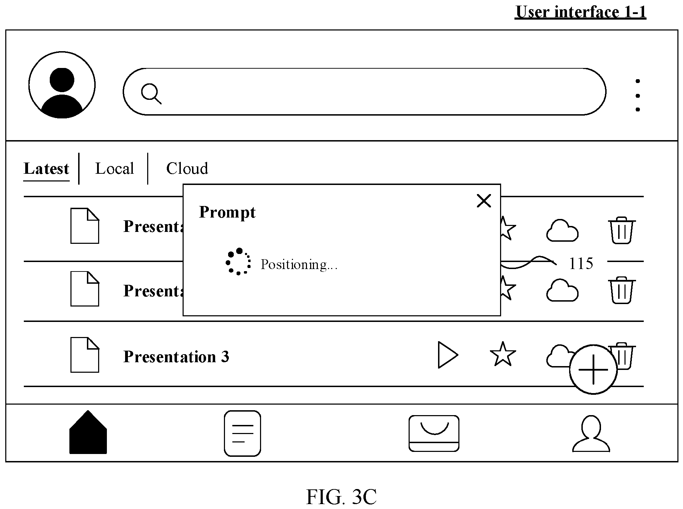

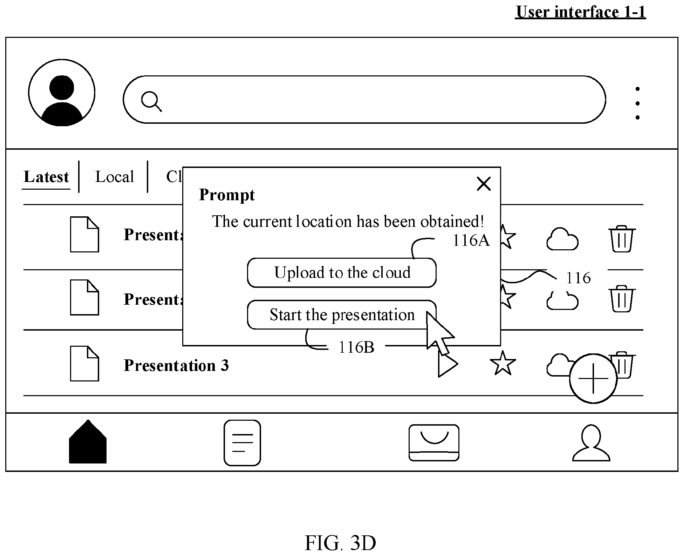

In a positioning process, the primary device 100 may update the first prompt information 114 to second prompt information 115 shown in FIG. 3C, where the second prompt information 115 indicates positioning to the user. Until the positioning is completed, the primary device 100 may update the second prompt information 115 to third prompt information 116 shown in FIG. 3D, where the third prompt information 116 indicates the user that the positioning is completed, and the current location of the primary device 100 has been obtained.

Optionally, when a positioning speed of the primary device 100 is high, the primary device 100 may not display the second prompt information 115 shown in FIG. 3C. After receiving the user operation performed on the first option 114A and completing the positioning, the primary device 100 directly displays the third prompt information 116 shown in FIG. 3D.

As shown in FIG. 3D, the third prompt information 116 may include a first option 116A and a second option 116B. The first option 116A may be used to trigger uploading of the currently collected location information to the cloud server.

The second option 116B may be used to trigger displaying of the multimedia content, and send the multimedia content to the secondary device 200 for display.

In some embodiments, in addition to determining the location of the virtual screen, the primary device 100 may further determine a size of the virtual screen, that is, a display size of the multimedia content. The size of the virtual screen may be a preset size, for example, a height of 1 meter and a width of 3 meters. Alternatively, the size of the virtual screen may be set by the speaker. In other words, the primary device 100 may adjust the size of the virtual screen based on a user operation, or the primary device 100 may automatically determine the size of the virtual screen based on a space size of a current environment. A manner of determining the size of the virtual screen is not limited in embodiments of this application.

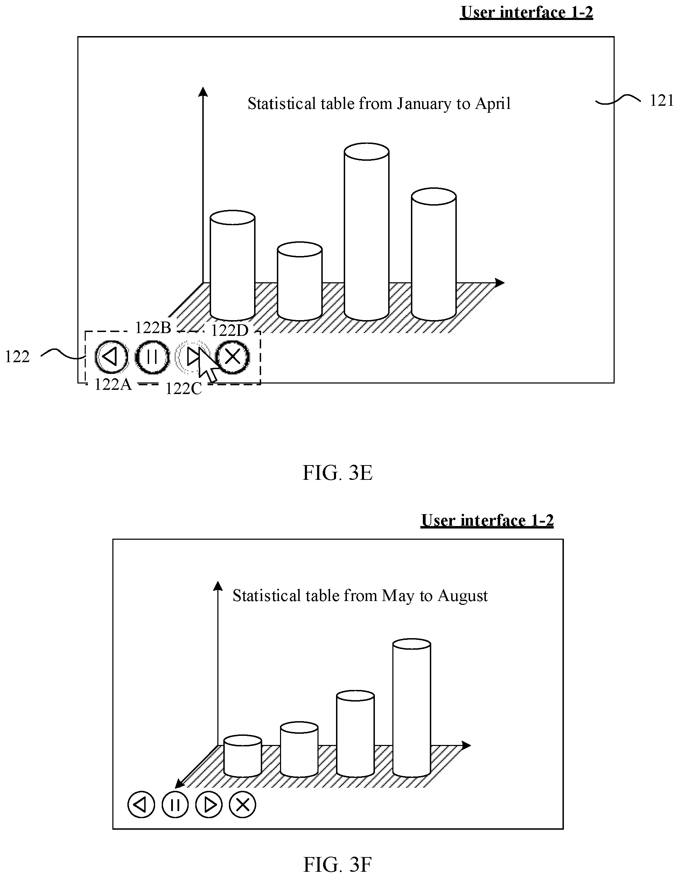

As shown in FIG. 3D, when the primary device 100 receives a user operation performed on the second option 116B, for example, a click operation of the cursor performed on the second option 116B, in response to the operation, the primary device 100 displays a user interface 1-2 shown in FIG. 3E, where the user interface 1-2 is configured to display the multimedia content.

As shown in FIG. 3E, the user interface 1-2 may include a display area 121 and a function selection area 122. The display area 121 is used to display the multimedia content.

The function selection area 122 may include one or more function icons. These function icons may receive user operations, and trigger controlling of the multimedia content displayed in the display area 121 to perform different operations. For example, the function selection area 122 may include a first icon 122A, a second icon 122B, a third icon 122C, and a fourth icon 122D. The first icon 122A may be used to switch to a previous page of the multimedia content, the second icon 122B may be used to pause the multimedia content displayed in the current display area 121, the third icon 122C may be used to switch to a next page of the multimedia content, and the fourth icon 122D may be used to end displaying the multimedia content.

As shown in FIG. 3E, when the primary device 100 receives a user operation performed on the third icon 122C, for example, a click operation of the cursor performed on the third icon 122C, in response to the operation, the primary device 100 switches to the next page of the multimedia content, and displays a user interface 1-2 shown in FIG. 3F.

In comparison between FIG. 3E and FIG. 3F, content displayed in the user interface 1-2 shown in FIG. 3E is "Statistical table from January to April", and content displayed in the user interface 1-2 shown in FIG. 3F is "Statistical table from May to August". The content shown in FIG. 3E and the content shown in FIG. 3F may be different parts of the same multimedia content, and the primary device 100 may switch between the previous page and the next page of the multimedia content to display different parts of the multimedia content.

It can be learned from FIG. 3A to FIG. 3F that, the primary device 100 may determine the location of the virtual screen for playing the multimedia content, and start the conference by obtaining and displaying the multimedia content. In addition, in a process of displaying the multimedia content, the primary device 100 may further trigger controlling of the multimedia content based on the user operation, for example, switching to the previous page of the multimedia content, switching to the next page of the multimedia content, pausing the currently played multimedia content, and ending displaying the multimedia content.

FIG. 4A shows a user interface 2-1 related when the secondary device 200 is configured to trigger joining of the conference and view the multimedia content. As shown in FIG. 4A, the user interface 2-1 may include a menu bar 211, a status bar 212, a first control 213, and a second control 214.

The menu bar 211 may include one or more options, and the one or more options may be used to receive user operations. Different application pages are displayed in the user interface 2-1. For example, the one or more options may include a home page option, a conference option, an application option, a local option, and the like. The home page option may be used to trigger displaying of one or more pieces of multimedia content. The conference option may be used to: trigger joining of a conference, and obtain and display multimedia content output by another device. The application option may be used to trigger displaying of one or more application functions. The local option may be used to trigger displaying of related information of a local account, where the related information includes a user name, a user profile picture, and the like. For example, the user interface 2-1 shown in FIG. 4A may be an application interface displayed on the secondary device 200 when the conference option is in a selected state.

The status bar 212 may include one or more signal strength indicators of a mobile communication signal, one or more signal strength indicators of a wireless fidelity (wireless fidelity, Wi-Fi) signal, a battery status indicator, and a time indicator.

The first control 213 may be configured to trigger joining of the conference. Specifically, the secondary device 200 may receive a user operation performed on the first control 213, and in response to the operation, the secondary device 200 displays the multimedia content provided by the primary device 100.

The second control 214 may be configured to trigger creating of the conference. When the secondary device 200 receives a user operation performed on the second control 214, the secondary device 200 may become an initiator of the conference, and the initiator may invite another member to join the conference together. A member in the conference may select multimedia content, determine a location of a virtual screen for playing the multimedia content, and display the multimedia content to the another member in the conference. In this case, the conference member that selects the multimedia content and determines the location of the virtual screen is a speaker of the conference, and the another member is a participant of the conference.

As shown in FIG. 4A, when the secondary device 200 receives the user operation, for example, a tap operation, performed on the first control 213, in response to the operation, the secondary device 200 displays, in the user interface 2-1, prompt information 215 shown in FIG. 4B, where the prompt information 215 indicates a user that a camera is starting up.

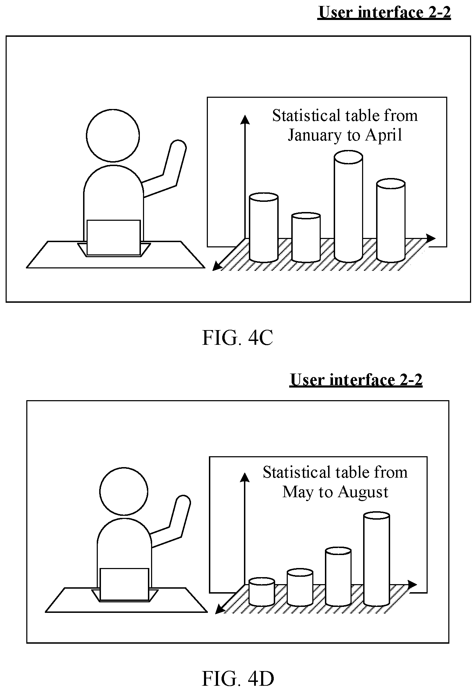

As shown in FIG. 4C, after the secondary device 200 starts up the camera (for example, a rear-facing camera), the secondary device 200 may capture an image via the camera, and display the multimedia content in a superimposing manner at a location of a virtual screen included the image, so that the user can view both a real environment and the multimedia content on a display of the secondary device 200. In addition, the multimedia content displayed in FIG. 4C may be multimedia content currently displayed on the primary device 100, namely, the multimedia content shown in FIG. 3E.

Optionally, after the secondary device 200 starts up the camera, the secondary device 200 may further output prompt information to indicate the user how to move the secondary device 200, so that the secondary device 200 aligns with the location of the virtual screen. This ensures that the user can quickly find a display location of the multimedia content when the user views the multimedia content on the secondary device 200. For example, the secondary device 200 may display an arrow on the display. When the secondary device 200 displays an arrow pointing to the left, the user is indicated to move the secondary device 200 to the left, so that the camera of the secondary device 200 moves to the left for a distance. When the secondary device 200 displays an arrow pointing to the right, the user is indicated to move the secondary device 200 to the right, so that the camera of the secondary device 200 moves to the right for a distance.

Optionally, after the secondary device 200 starts up the camera, the secondary device 200 may further receive an operation of adjusting a focal length of the camera by the user, to zoom in or zoom out a view angle of the camera, so as to zoom in or zoom out the multimedia content displayed on the secondary device 200. The user may view details of the multimedia content by zooming in the focal length, or the user may view more content in addition to the multimedia content by zooming out the focal length, for example, view an action of the speaker located next to the virtual screen.

In a process in which the secondary device 200 displays the multimedia content, when the primary device 100 controls the multimedia content to be switched to a next page of the multimedia content, that is, displays the multimedia content shown in FIG. 3F, the secondary device 200 may synchronously display changed multimedia content, where the changed multimedia content may be content displayed in the user interface 2-2 shown in FIG. 4D.

It can be learned from FIG. 4A to FIG. 4D that, the secondary device 200 may receive the operation of triggering joining of the conference by the user, trigger starting up of the camera, and superimpose the multimedia content on the image captured by the camera in real time. In this way, the user can implement effect of viewing the conference by viewing the content displayed on the secondary device 200. In addition, in a process in which the primary device 100 triggers based on the user operation, controlling of the multimedia content and performing different operations, for example, switching to a previous page of the multimedia content, switching to the next page of the multimedia content, pausing the currently played multimedia content, and ending displaying the multimedia content, the secondary device 200 may also control, in response to the user operation, the multimedia content displayed on the secondary device 200 and perform the same operations, for example, switching to the previous page of the multimedia content, switching to the next page of the multimedia content, pausing the currently played multimedia content, and ending displaying the multimedia content.

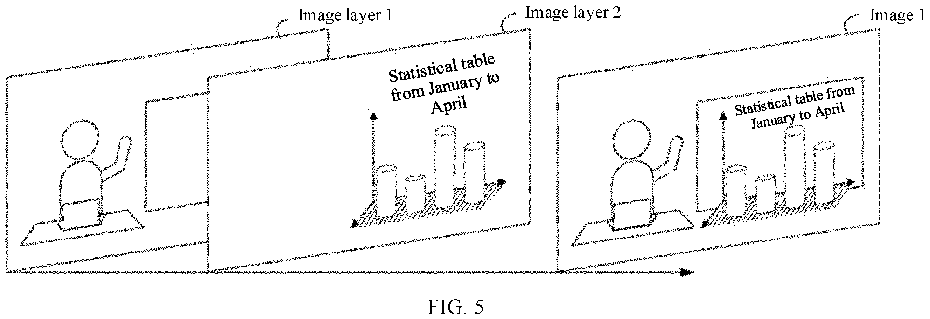

FIG. 5 shows an image layer superimposition principle related when the secondary device 200 displays both the image captured by the camera and the multimedia content.

As shown in FIG. 5, content displayed at an image layer 1 may be the image captured by the camera of the secondary device 200 in real time, and an image layer 2 is used to display the multimedia content received by the secondary device 200. The secondary device 200 may superimpose the image layer 1 and the image layer 2 to obtain an image 1. Both the image captured by the camera in real time and the multimedia content are displayed in the image 1, and the image 1 is content displayed on the display of the secondary device 200.

In addition, when the secondary device 200 controls, based on the operation performed by the user on the primary device 100, the multimedia content and perform different operations, the secondary device 200 may change, in response to the operation, content displayed at the image layer 2, for example, switch and display different parts of the multimedia content, pause the content currently displayed at the image layer 2, and end displaying the content displayed at the image layer 2.

It should be noted that, FIG. 5 shows, by using an example in which the secondary device 200 is a mobile phone, the principle that the secondary device 200 displays both the real environment and the multimedia content in a superimposing manner. When the secondary device 200 is an AR device, content shown at the image layer 1 is a picture that is in the real environment and that is observed by a user wearing the AR device with naked eyes, and content shown at the image layer 2 is multimedia content displayed by the AR device, or multimedia content that is projected by the AR device onto a retina of the user via a lens. The image 1 may be content that can be viewed after the picture that is in the real environment and that is obtained by the user with human eyes and the multimedia content are superimposed on the retina.

In some embodiments, a manner of displaying the multimedia content on the primary device 100 may alternatively be the same as a manner of displaying the multimedia content on the secondary device 200. To be specific, when the multimedia content is displayed, the user may view the real environment on the primary device 100. In this way, in the conference process, experience of viewing the multimedia content on the primary device 100 by the user is the same as experience of viewing the multimedia content on the secondary device 200.

The presentation method provided in embodiments of this application is described below in detail based on the application scenario shown in FIG. 1, the communication system 1000 shown in FIG. 2, the user interfaces implemented on the primary device 100 shown in FIG. 3A to FIG. 3F, and the user interfaces implemented on the secondary device 200 shown in FIG. 4A to FIG. 4D.

In embodiments of this application, the presentation method relates to a primary device and a secondary device, or further, to a server. The primary device may be configured to initiate a conference. The secondary device may join the conference. The server is an optional device, and may forward communication information between the primary device and the secondary device, perform distance determining, and store data. When the presentation method does not relate to the server, the primary device and the secondary device both may be located in an environment and close to each other, and the primary device and the secondary device hold the conference in a direct communication manner. This can reduce a trouble of data forwarding, and reduce a delay of outputting multimedia content by the secondary device. When the presentation method relates to the server, the primary device may remotely initiate the conference. Even if the primary device is not located near the secondary device, the primary device can still provide multimedia content for the secondary device, so that the secondary device can remotely view content shared by the primary device. In this way, the conference is not limited by a distance, and it is ensured that the secondary device can view the content shared by the primary device regardless of how far away from the primary device, so that the conference can be held without a limitation of a geographical location of a conference member.

In the following two embodiments, a presentation method related to a primary device, a secondary device, and a server is described in Embodiment 1, and a presentation method related to only a primary device and a secondary device is described in Embodiment 2.

(1) Embodiment 1

The presentation method provided in this embodiment of this application is described below with reference to FIG. 6 to FIG. 9.

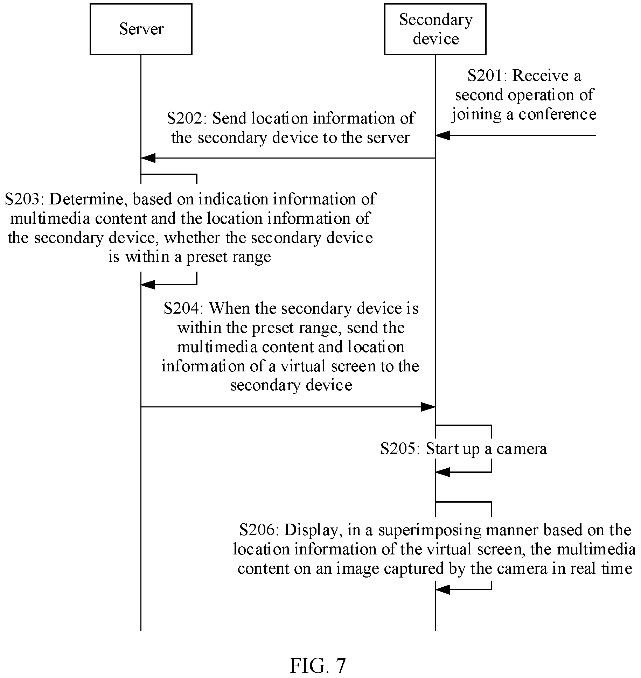

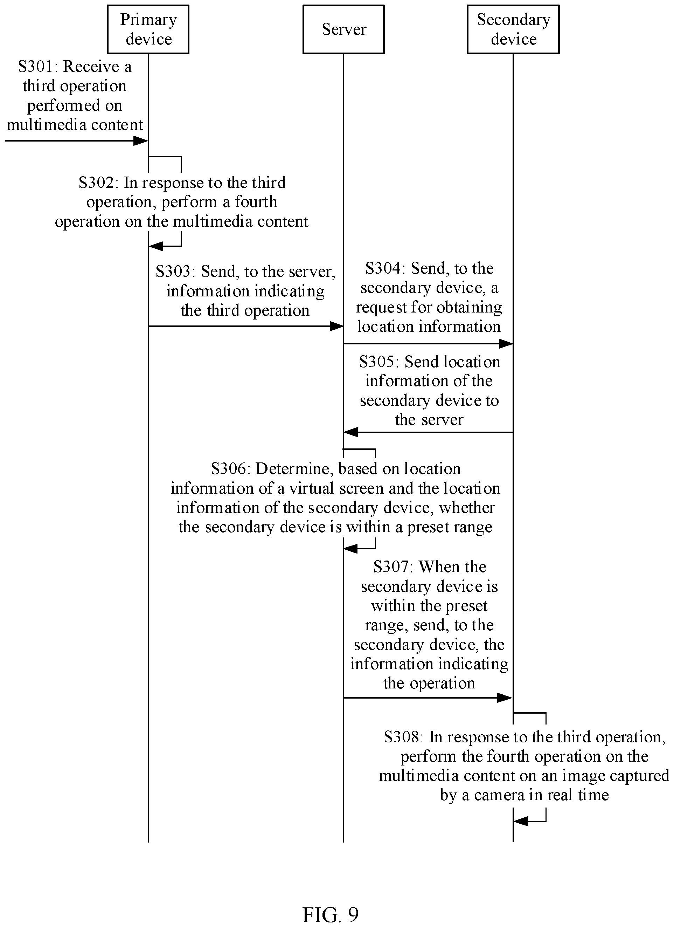

The presentation method can be divided into three phases: The primary device initiates a conference, the secondary device joins the conference, and the primary device changes conference content. Phase 1 mainly relates to interaction between the primary device and the server. For details, refer to a schematic flowchart shown in FIG. 6. Phase 2 mainly relates to interaction between the server and the secondary device. For details, refer to a schematic flowchart shown in FIG. 7. Phase 3 mainly relates to interaction between the primary device, the server, and the secondary device. For details, refer to a schematic flowchart shown in FIG. 9.

Phase 1: The primary device initiates the conference.

As shown in FIG. 6, the phase 1 may include the following steps.

S101: The primary device obtains multimedia content.

The primary device may be the primary device 100 mentioned above. The primary device may be a device used by a speaker. The primary device may determine, based on an operation of the speaker, multimedia content that needs to be displayed in the conference, determine a location of a virtual screen for displaying the multimedia content, trigger starting of the conference, and the like.

The multimedia content may be content that needs to be displayed by the speaker in a conference process, and is used to assist in explaining the conference. For example, in a work conference scenario, the multimedia content may be company materials that need to be displayed when a company member explains the conference. For another example, in a class conference scenario, the multimedia content may be class materials used by a teacher during teaching. In embodiments of this application, the multimedia content may also be referred to as first content.

The multimedia content may include but is not limited to visual content such as a video, a picture, a text, a photo, and a chart, and the content may be represented as two-dimensional planar content and/or three-dimensional stereoscopic content. For example, the multimedia content may be represented as a presentation. The presentation may include one or more slides. Content such as a video, a picture, a text, a photo, and a chart may be displayed in each slide, and content such as an audio and an animation may be further added. In other words, the multimedia content may include a plurality of pieces of to-be-displayed content, and a user may switch the multimedia content by switching content corresponding to a page code, to display all the content included in the multimedia content to the user.

Manners in which the primary device obtains the multimedia content may include but are not limited to the following two manners.

(1) The primary device obtains the multimedia content locally.

The multimedia content may be content locally stored by the primary device, and the primary device may directly obtain the multimedia content from a storage space. Alternatively, an application for producing the multimedia content may be installed on the primary device, and the primary device may produce the multimedia content on the application based on a user operation.

(2) The primary device obtains the multimedia content from the server.

The server may store one or more pieces of multimedia content, and the multimedia content may come from the primary device and/or another device. When the multimedia content needs to be displayed, the primary device may find the multimedia content from the server and download the multimedia content to the primary device. This can prevent the multimedia content from occupying a storage space of the primary device when the multimedia content is not necessary.

In some embodiments, the primary device may display options corresponding to one or more pieces of multimedia content, and the primary device may select, from the one or more pieces of multimedia content based on a user operation, the multimedia content that needs to be displayed this time. For example, as shown in FIG. 3A, the content display area 112 may display options corresponding to one or more pieces of multimedia content.

S102: The primary device receives a first operation of playing the multimedia content.

In some embodiments, the primary device may display one or more play options, and one play option corresponds to one piece of multimedia content. The primary device may receive an operation performed on one of the play options, and trigger, in response to the operation, playing of multimedia content corresponding to the play option.

For example, the first operation may be the user operation performed on the play icon 1121A shown in FIG. 3A.

It may be understood that a sequence of step S101 and step S102 is not limited in embodiments of this application. In some embodiments, step S101 may be performed before step S102. In this case, the primary device may first obtain the to-be-played multimedia content, and then receive the play operation performed by the user on the multimedia content. In some other embodiments, step S102 may be performed before step S101. In this case, the primary device may first receive the play operation performed by the user on the multimedia content, and trigger obtaining of the multimedia content, for example, obtaining the multimedia content from the server.

S103: The primary device obtains location information of a virtual screen.

The virtual screen may be an imaginary screen for displaying the multimedia content. The primary device may specify a location in a real environment as a location of the virtual screen. In other words, the location of the virtual screen is a location, in a physical space, that is determined by the primary device. In this way, when the user views the real environment on the secondary device, the user can view the multimedia content displayed at the location. In embodiments of this application, the location of the virtual screen may also be referred to as a first location.

The location information may include longitude, latitude, and altitude in a geodetic coordinate system. For example, the location information may be represented as three-dimensional coordinates in an XYZ coordinate system, where an X-axis vector may represent a longitude value, a Y-axis vector may represent a latitude value, and a Z-axis vector may represent an altitude value.

The primary device may obtain the location information of the virtual screen in the following three manners.

(1) The primary device starts positioning, and obtains the location information of the virtual screen.

To be specific, the primary device may start positioning, and determine a current location of the primary device as the location of the virtual screen. For example, when determining the location of the virtual screen, the primary device may be moved to, by the speaker, a location near a blackboard, start positioning, and determine the current location of the primary device as the location of the virtual screen. In this way, when viewing the multimedia content on the secondary device, a participant can view that the multimedia content is displayed on the blackboard.

(2) The primary device determines the location information of the virtual screen from locally stored location information.

The location information locally stored in the primary device may be location information obtained by the primary device when the primary device historically starts positioning, and the location information may be location information that is of the virtual screen and that is historically determined by the primary device. In this way, the primary device may not need to start positioning to determine a location of the virtual screen when starting a conference each time. This accelerates a speed of starting the conference by the primary device, and when the primary device is inconvenient to move, the primary device can still quickly and conveniently start the conference.

(3) The primary device obtains the location information of the virtual screen from the server.

The server may store one or more locations that can be selected by the user, and the primary device may select one location from the one or more locations stored in the server as the location of the virtual screen. In this way, when the primary device does not have a positioning function or is inconvenient to move, the primary device can directly select a location from the locations stored in the server as the location of the virtual screen.

That is, the primary device may directly start positioning or select a location from known locations, to determine the location of the virtual screen. It may be understood that a manner in which the primary device obtains the location information of the virtual screen is not limited to the foregoing three manners. For example, the primary device may further send a positioning request to another device (for example, a third device), to obtain a location of the another device, and use the location as the location of the virtual screen.

In some embodiments, the primary device may further determine a size of the virtual screen, including a width and a height of the virtual screen. The size of the virtual screen may be a preset size, or the primary device may determine the size of the virtual screen based on a user operation, or the primary device may automatically adjust the size of the virtual screen based on a size of the real environment, or the like.

It should be noted that the presentation method provided in this embodiment of this application may be applied to conference scenarios such as an on-site conference and a remote conference. The on-site conference indicates that the speaker and the participant gather together to hold the conference. The primary device and the secondary device may be located in a same physical space. The speaker may determine the virtual screen in the physical space. The participant may view, on the secondary device, the multimedia content on the virtual screen, view an action of the speaker, and hear a voice of the speaker. In this case, the primary device can determine the location of the virtual screen in the foregoing three manners. The remote conference indicates that the speaker and the participant are located in different places to hold the conference. The primary device and the secondary device may be located in different physical spaces. The speaker may remotely determine the virtual screen near a location of the participant. The participant may view, on the secondary device, the multimedia content on the virtual screen, and further, the participant may remotely obtain, on the secondary device, a voice of the speaker collected on the primary device. In this case, the primary device can determine the location of the virtual screen in the last two manners.

In some embodiments, the primary device may further determine a shape of the virtual screen. The virtual screen may be represented in a shape like a rectangle, a square, a circle, or a heart shape, to provide the user with richer and interesting view effect.

In some embodiments, there may be one or more virtual screens, that is, the primary device may determine one or more locations for displaying the multimedia content. In this way, the participant can adjust a view angle based on a requirement of the participant. This enhances conference interest and user's view effect.

It may be understood that an execution sequence of step S103 is not limited in embodiments of this application, and step S103 may be performed before or after step S101, or before or after step 5102. To be specific, the primary device may first start the conference, and then determine the location of the virtual screen; or may first determine the location of the virtual screen, and then start the conference.

S104: The primary device plays the multimedia content in response to the first operation.

The primary device may display a playing interface in response to the operation of playing the multimedia content, and display the multimedia content in the playing interface. For example, when the multimedia content is a presentation, one slide of the presentation may be displayed in the current playing interface.

For example, the playing interface may be the user interface 1-2 shown in FIG. 3E.

S105: The primary device sends indication information of the multimedia content to the server.

The indication information sent by the primary device to the server includes the following two cases.

(1) The multimedia content is content locally obtained by the primary device.
When the multimedia content is the content locally obtained by the primary device, the indication information sent by the primary device to the server may include the multimedia content and the location information of the virtual screen. After obtaining the multimedia content, the server may send the multimedia content to the secondary device, so that the secondary device displays the multimedia content; or the server may store the multimedia content, so that the primary device or another device obtains the multimedia content from the server when a next conference is held.
(2) The multimedia content is content obtained by the primary device from the server.

When the multimedia content is the content obtained by the primary device from the server, the indication information sent by the primary device to the server may include an identifier of the multimedia content and the location information of the virtual screen.

For example, the indication information sent by the primary device to the server may include a structure of multimedia content Entity:

```
Entity {
    Double  Latitude;
    Double  Longitude;
    Double  Altitude;
    Vector3  Direction;
    String  ResourceId;
    String  ResourceUri;
}
```

Latitude represents longitude of the location of the virtual screen. Longitude represents latitude of the location of the virtual screen. Altitude represents altitude of the location of the virtual screen. ResourceId represents the identifier of the multimedia content. ResourceUri represents a download address of the multimedia content, or a manner of obtaining the multimedia content, for example, HTTP download or FTP download.

Phase 2: The secondary device joins the conference.

As shown in FIG. 7, the phase 2 may include the following steps.

S201: The secondary device receives a second operation of joining the conference.

The secondary device may be the secondary device 200 mentioned above. The secondary device may be a device used by the participant. The secondary device may join the conference based on the operation of the participant. The participant may view, on the secondary device, the multimedia content provided by the primary device.

For example, the second operation may be the user operation performed on the first control 213 shown in FIG. 4A.

In some embodiments, in addition to triggering, by the secondary device, joining of the conference based on the user operation, the secondary device may alternatively trigger joining of the conference after receiving the indication information that is sent by the primary device for starting the conference. In other words, after the primary device receives the first operation of playing the multimedia content and sends the indication information of the multimedia content to the server, the server may send a request for obtaining location information of the secondary device to the secondary device. The secondary device herein may refer to a device that is associated with the primary device in advance. For example, a communication connection is established, or the secondary device and the primary device are located in a same account group. That is, when an association relationship is established between the primary device and the secondary device in advance, the primary device may automatically add the secondary device to the conference based on a location of the secondary device when starting the conference.

S202: The secondary device sends location information of the secondary device to the server.

In response to the operation of joining the conference received by the secondary device, the secondary device starts positioning, and sends the location information of the secondary device to the server, so that the server determines, based on locations of the secondary device and the virtual screen, whether to send the multimedia content to the secondary device. This ensures that the secondary device can display the multimedia content provided by the primary device only when the secondary device is close to the virtual screen.

Similar to the location information of the virtual screen, the location information of the secondary device may include longitude, latitude, and altitude in the geodetic coordinate system. For the location information of the secondary device, refer to the location information of the virtual screen. Details are not described herein again.

S203: The server determines, based on the indication information of the multimedia content and the location information of the secondary device, whether the secondary device is within a preset range.

Specifically, the server may determine, based on the location information of the virtual screen included in the indication information of the multimedia content and the location information of the secondary device, whether the secondary device is within a preset range of the location of the virtual screen.

In a specific implementation, the server may determine, by using an octree, whether the secondary device is within the preset range. The octree is a tree-like data structure describing a three-dimensional space. The server may implement, by using the octree, near neighbor search on the location of the virtual screen, and quickly select a secondary device that is close to the virtual screen. In other words, when the server obtains location information of a plurality of secondary devices, the server may quickly select, from the plurality of secondary devices by using the octree, a secondary device whose distance from the virtual screen is less than or equal to a preset value.

When the server determines, by using the octree, whether the secondary device is within the preset range, the following steps may be specifically included.

Step 1: Process data.

When a device performs GPS positioning, obtained location information is location information in the geodetic coordinate system. Therefore, the server may convert the location information of both the virtual screen and the secondary device into location information in a world geodetic system, which is also referred to as a Cartesian coordinate system. For example, the server may perform coordinate system conversion according to the WGS84 standard.

Specifically, the server may convert location coordinates (Latitude, Longitude, Altitude) in the geodetic coordinate system into location coordinates (x, y, z) in the world geodetic system. For example, it is assumed that location coordinates of the virtual screen in the geodetic coordinate system are (Latitude0, Longitude0, Altitude0), and converted location coordinates are (x0, y0, z0); location coordinates of a secondary device A in the geodetic coordinate system are (Latitude1, Longitude1, Altitude1), and converted location coordinates are (x1, y1, z1); and location coordinates of a secondary device B in the geodetic coordinate system are (Latitude2, Longitude2, Altitude2), and converted location coordinates are (x2, y2, z2).

Step 2: Determine an octree parameter.

The server may determine a layer number level of the octree and each node of the octree according to Formula 1 and Formula 2, where coordinates of the node are (col_x, col_y, col_z).

$$level=[S/s]+1 \quad \text{Formula 1}$$

$$col\_x=[x/(s*level)], \; col\_y=[y/(s*level)], \; col\_z=[z/(s*level)] \quad \text{Formula 2}$$

A function y=[x] is a rounding function, and y is equal to a largest integer not greater than x.

S represents a preset range, and a unit is meter. In other words, a secondary device within S meters away from the virtual screen may view the multimedia content, s represents a minimum interval of the octree, and a unit is meter. S may be determined by a speaker based on a size of a conference site, or S may be a fixed value, for example, 3 meters. A value of S is not limited in embodiments of this application. s is determined based on system performance of the server. For example, when the system performance is good, s may be a small value; or when the system performance is poor, s may be a large value.

(x, y, z) represents location coordinates of the virtual screen or the secondary device in the Cartesian coordinate system. The location coordinates of the virtual screen or the secondary device may be mapped to a node of the octree according to Formula 2, and coordinates of the node are (col_x, col_y, col_z).

For example, it is assumed that converted location coordinates of the virtual screen are (x0, y0, z0), and coordinates of a node that is of the octree and to which the converted location coordinates of the virtual screen are mapped are (col_x0, col_y0, col_z0). It is assumed that there is a secondary device A, converted location coordinates of the secondary device A are (x1, y1, z1), and coordinates of a node that is of the octree and to which the converted location coordinates of the secondary device A are mapped are (col_x1, col_y1, col_z1); and there is a secondary device B, converted location coordinates of the secondary device B are (x2, y2, z2), and coordinates of a node that is of the octree and to which the converted location coordinates of the secondary device B are mapped are (col_x2, col_y2, col_z2).

That is, the server may map the locations of both the virtual screen and the secondary device to nodes of the octree according to Formula 1 and Formula 2.

Step 3: Select a secondary device based on the octree parameter.

A node to which the location coordinates of the virtual screen are mapped may be a central node O (col_x0, col_y0, col_z0) of the octree.

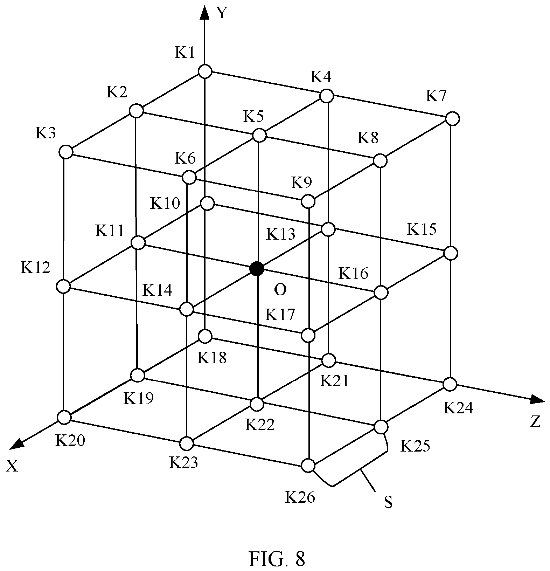

Then, coordinates of 26 nodes around the central node O may be determined based on ((col_x0±S, col_y0±S, col_z0±S)). For example, as shown in FIG. 8, a point O is the central node of the octree, and K1 to K26 are 26 nodes around the point O. The server may select, by using the 26 nodes, a secondary device that preliminarily meets a requirement. Specifically, when a node to which a secondary device is mapped is within the 26 nodes, the secondary device preliminarily meets the requirement.

Step 4: Further select a secondary device based on a Euclidean distance.

After selecting the secondary device that preliminarily meets the requirement, the server may further determine whether a Euclidean distance between the selected secondary device and the virtual screen is less than S. If the Euclidean distance between the selected secondary device and the virtual screen is less than S, it indicates that a distance between the secondary device and the virtual screen is less than or equal to the preset value. Otherwise, the secondary device is located outside the preset range of the virtual screen.

It can be learned from step 1 to step 4 that, the server may map the locations of both the virtual screen and the secondary device to the octree, and determine whether the node at which the secondary device is located is within a specified range of the node at which the virtual screen is located, that is, within the 26 nodes around the node at which the virtual screen is located, to preliminarily select the secondary device that meets the requirement. Then, the server calculates the Euclidean distance between the secondary device that preliminarily meets the requirement and the virtual screen, to finally select the secondary device whose distance from the virtual screen is less than or equal to the preset value.

Compared with a manner in which a server directly calculates Euclidean distances between all secondary devices and a virtual screen, this manner in which some secondary devices are selected by using the octree, and then Euclidean distances between the some secondary devices and the virtual screen are calculated to finally determine the secondary device within the preset range has a faster operation speed and consumes less time, so that the secondary device can join the conference as soon as possible. This improves conference experience of the participant.

It may be understood that the server may alternatively determine, in another manner, whether the secondary device is within the preset range. For example, the server may directly determine, based on a Euclidean distance between the secondary device and the virtual screen, whether the secondary device is within the preset range. For another example, the server may determine, based on whether signal strength of the secondary device is within a threshold range, whether the secondary device is within the preset range. In addition, the server may alternatively select the secondary device by using a quadtree in addition to the octree, and determine, as soon as possible, whether the secondary device is within the preset range. A manner of determining whether the secondary device is within the preset range is not limited in embodiments of this application.

In this embodiment of this application, the server may store data, forward data, and determine a distance. Storing data means that the server may be configured to store the multimedia content and/or the location of the virtual screen. Forwarding data means that the server may be configured to forward information sent by the primary device to the secondary device, for example, the indication information of the multimedia content. Determining a distance means that the server may be configured to determine whether the distance between the secondary device and the virtual screen is less than or equal to the preset value. A quantity of servers is not limited in embodiments of this application. For example, a server configured to store the multimedia content and/or the location of the virtual screen may be a storage server, and a server configured to determine whether the distance between the secondary device and the virtual screen is less than or equal to the preset value may be a management server. The storage server and the management server may be different servers, or the storage server and the management server may be a same server.

S204: When the secondary device is within the preset range, the server sends the multimedia content and the location information of the virtual screen to the secondary device.

When the secondary device is within the preset range of the location of the virtual screen, the server may send the multimedia content and the location information of the virtual screen to the secondary device, so that the secondary device displays the multimedia content at a specified location. Otherwise, the server does not send the multimedia content and the location information of the virtual screen to the secondary device. This can ensure that the secondary device can view the multimedia content only in the conference site, and improve conference security.

In some embodiments, the server may send, to the secondary device, the indication information that is of the multimedia content and that is sent by the primary device, and the secondary device may obtain the multimedia content and the location information of the virtual screen based on the indication information.

S205: The secondary device starts up a camera.

When the secondary device is within the preset range, the secondary device may start up the camera to capture an image in real time, and present the image to the user, so that the user views the real environment on the secondary device.

When the secondary device starts up the camera, the secondary device may display, in real time, the image captured by the camera. In addition, the secondary device may display prompt information (for example, first prompt information), where the prompt information indicates a direction in which the secondary device needs to deflect, and the direction is a direction pointing from the location of the secondary device to the location of the virtual screen. This is because before the participant views the multimedia content, the participant may not know the location of the virtual screen. The secondary device may guide the user how to move the secondary device, so that the camera of the secondary device can point to the location of the virtual screen, and the participant can view the multimedia content as soon as possible.

S206: The secondary device displays, in a superimposing manner based on the location information of the virtual screen, the multimedia content on the image captured by the camera in real time.

After the secondary device obtains the location of the virtual screen, the secondary device may superimpose, based on a relative location relationship between the secondary device and the virtual screen, the multimedia content on the image captured by the camera in real time. It can be learned from the display of the secondary device that a location of the multimedia content is located at the location that is of the virtual screen and that is determined by the primary device. In other words, a display location of the multimedia content in the image overlaps the location of the virtual screen in the image. For example, when the speaker specifies that a location of the blackboard is the location of the virtual screen, and the image captured by the secondary device in real time includes the blackboard, the secondary device may display the multimedia content at a location of the blackboard on the image in a superimposing manner, so as to provide, for the user, visual experience that the multimedia content is being played on the blackboard.

It should be noted that, when the secondary device is an AR device, step S205 is an optional step, and the secondary device may not superimpose the multimedia content on an image captured by a camera in real time, but may project, based on the location information of the virtual screen via a lens of the secondary device, the multimedia content onto a retina of the user, so that the multimedia content is superimposed on a location that is of the virtual screen and that is viewed by the user via the lens of the AR device. In this way, when the user views the real environment by using the AR device, the multimedia content is superimposed on the location of the virtual screen in the real environment.

Specifically, the AR device may include the transparent lens, and the user may directly see the real environment via the transparent lens. In addition, the AR device may further include a projector, where the projector may project the multimedia content, and then project the multimedia content onto a retina of a human eye via the lens, to superimpose the multimedia content with the real environment directly seen by the user. In a superimposed image, the multimedia content is displayed at the specified location of the virtual screen in the real environment. The secondary device may determine, based on a location and an angle of the secondary device relative to the virtual screen in an actual physical space, an angle and a location of delivering the multimedia content, so that the multimedia content is superimposed on the location of the virtual screen in an image observed by the user with human eyes.

Phase 3: The primary device changes the conference content

As shown in FIG. 9, the phase 3 may include the following steps.

S301: The primary device receives a third operation performed on the multimedia content.

In some embodiments, the primary device may control playing, pausing, switching, and ending of the multimedia content based on a user operation. For example, the primary device may receive an operation of switching the multimedia content by the user, and change a display picture of the multimedia content, that is, display a next page of the multimedia content.

For example, the third operation may be a user operation performed on the third icon 122C shown in FIG. 3E.

S302: In response to the third operation, the primary device performs a fourth operation on the multimedia content.

When the third operation received by the primary device is a pause operation, the primary device may pause playing the multimedia content in response to the operation. When the third operation received by the primary device is an end operation, the primary device may end displaying the multimedia content in response to the operation. When the third operation received by the primary device is a switch operation, the primary device may switch, in response to the operation, the display picture for displaying the multimedia content. When the third operation received by the primary device is a play operation, the primary device may start playing the multimedia content in response to the operation.

For example, refer to FIG. 3E and FIG. 3F. FIG. 3E shows content on a previous page of the multimedia content, and FIG. 3F shows content on a next page of the multimedia content. When the primary device detects the user operation performed on the third icon 122C shown in FIG. 3E, content displayed by the primary device may be switched from the content shown in FIG. 3E to the content shown in FIG. 3F.

S303: The primary device sends, to the server, information indicating the third operation.

The primary device sends, to the server, the information indicating the third operation, so that the primary device can send, to the secondary device via the server, the information indicating the third operation, and the secondary device synchronously controls, based on the operation performed by the user on the primary device, the secondary device to perform the fourth operation on the multimedia content, and controls the multimedia content to complete switching, ending, playing, pausing, and the like.

In some embodiments, in a process in which the primary device sends, to the server, the information indicating the third operation, the primary device may further send information such as a page code number of the multimedia content and an identifier of the multimedia content to the server, so that the server sends the page code number of the multimedia content and the identifier of the multimedia content to the secondary device, and the secondary device can determine, based on the identifier of the multimedia content, the multimedia content corresponding to the third operation, and further determine, based on the page code number, specific content in the multimedia content corresponding to the third operation. For example, it is assumed that the page code number is 4. When the third operation, performed on the multimedia content, received by the primary device is used to complete switching the multimedia content, the secondary device may control, based on the page code number and the third operation, switching the multimedia content from content corresponding to a fourth page to content corresponding to a fifth page.

It may be understood that an execution sequence of step S302 and step S303 is not limited in this embodiment of this application. The primary device may first send, to the server, the information indicating the third operation, and then perform the fourth operation on the multimedia content; after the primary device performs the fourth operation on the multimedia content, the primary device sends, to the server, the information indicating the third operation; or the primary device may perform the fourth operation on the multimedia content when sending, to the server, the information indicating the third operation.

S304: The server sends, to the secondary device, a request for obtaining location information.

After receiving the information sent by the primary device, the server may trigger the secondary device to perform positioning and obtain current location information of the secondary device. This ensures that when the distance between the secondary device and the virtual screen is less than or equal to the preset value, the secondary device can synchronously control, based on the operation of controlling the multimedia content by the primary device, the multimedia content displayed on the secondary device.

S305: The secondary device sends the location information of the secondary device to the server.

The secondary device may enable a positioning function based on the obtained request, obtain the current location information of the secondary device, and send the current location information of the secondary device to the server.

S306: The server determines, based on the location information of the virtual screen and the location information of the secondary device, whether the secondary device is within the preset range.

Specifically, the server may determine, based on a location relationship between the virtual screen and the secondary device, whether the secondary device is within the preset range of the location of the virtual screen. The server may determine, by using an octree, whether the secondary device is within the preset range. For specific descriptions of this part, refer to related content of step S203.

In relative to the location information, of the secondary device, obtained by the server in step S203, if a location, of the secondary device, obtained in step S306 is changed, the server may recalculate node coordinates after the location of the secondary device is mapped to the octree, so as to re-determine whether the location of the secondary device is within the preset range; or if a location of the secondary device is not changed, the server may directly obtain, based on a result determined in step S203, whether the secondary device is within the preset range.

S307: When the secondary device is within the preset range, the server sends, to the secondary device, the information indicating the third operation.

When the secondary device is within the preset range, it indicates that the secondary device is still located in the conference site, and the secondary device may synchronously trigger, based on control on the multimedia content on the primary device, control on the multimedia content displayed on the secondary device, that is, obtain the information that is sent by the server and that indicates the operation received by the primary device.

Alternatively, if the secondary device is not within the preset range, the server may not send, to the secondary device, the information indicating the third operation. In this way, when the secondary device is far away from the conference site, the multimedia content displayed on the secondary device does not change with the operation of the speaker performed on the multimedia content on the primary device. This avoids that the secondary device still displays the conference content after being far away from the conference site, and saves system resources.

S308: In response to the third operation, the secondary device performs the fourth operation on the multimedia content on the image captured by the camera in real time.

In response to the third operation of the speaker performed on the multimedia content on the primary device, the secondary device may synchronously change the multimedia content displayed on the secondary device, for example, pause the multimedia content, play the multimedia content, end the multimedia content, or switch the multimedia content. For details about the fourth operation performed on the secondary device, refer to related descriptions in step S302. Details are not described herein again.

For example, refer to FIG. 4C and FIG. 4D. In the multimedia content displayed on the secondary device, the multimedia content may be switched, following a switch operation performed by the user on the primary device, from content of a previous page shown in FIG. 4C to content of a next page shown in FIG. 4D.

(2) Embodiment 2

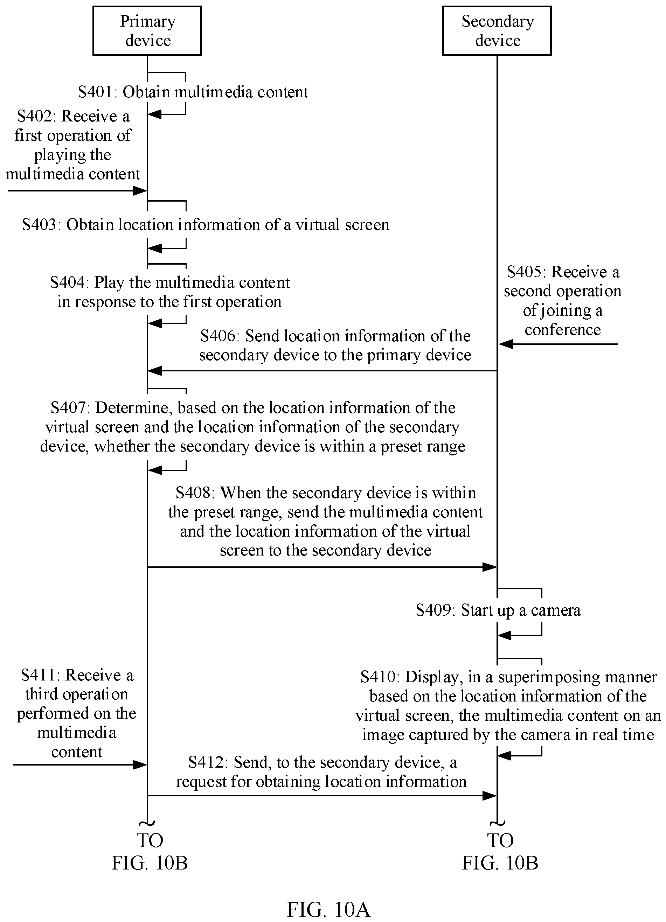

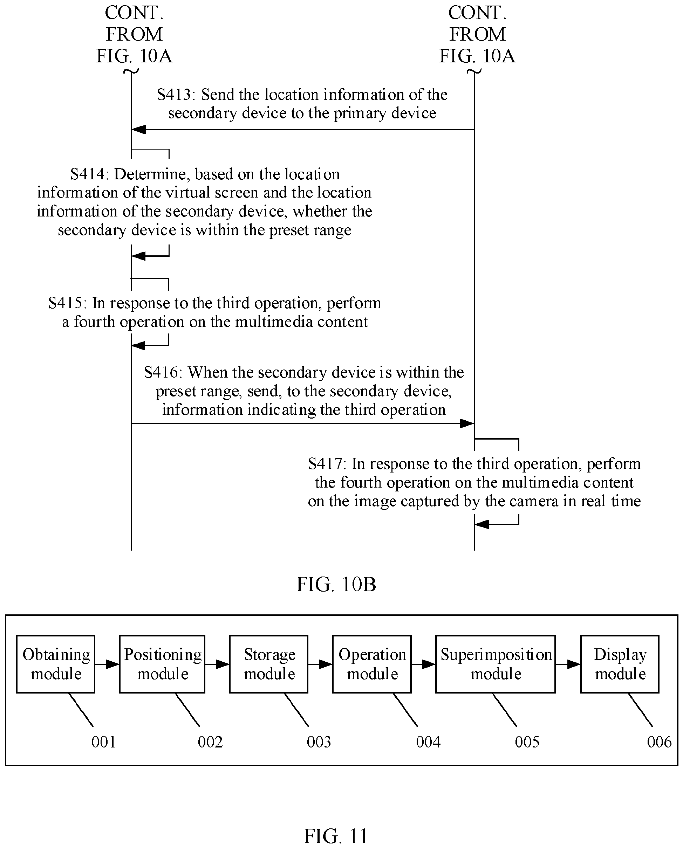

FIG. 10A and FIG. 10B are a schematic flowchart of another presentation method according to an embodiment of this application.

As shown in FIG. 10A and FIG. 10B, the method relates to the primary device and the secondary device, and the method includes the following steps.

Phase 1 (S401 to S404): The primary device initiates a conference.

S401: The primary device obtains multimedia content.

S402: The primary device receives a first operation of playing the multimedia content.

S403: The primary device obtains location information of a virtual screen.

S404: The primary device plays the multimedia content in response to the first operation.

Steps S401 to S404 are the same as steps S101 to S104 in FIG. 6. For details, refer to related descriptions.

Phase 2 (S405 to S410): The secondary device joins the conference.

S405: The secondary device receives a second operation of joining the conference.

S406: The secondary device sends location information of the secondary device to the primary device.

S407: The primary device determines, based on the location information of the virtual screen and the location information of the secondary device, whether the secondary device is within a preset range.

S408: When the secondary device is within the preset range, the primary device sends the multimedia content and the location information of the virtual screen to the secondary device.

S409: The secondary device starts up a camera.

S410: The secondary device displays, in a superimposing manner based on the location information of the virtual screen, the multimedia content on an image captured by the camera in real time.

Steps S405, S409, and S410 are the same as steps S201, S205, and S206 in FIG. 7. For details, refer to related descriptions. Steps S406 to S408 are similar to steps S202 to S204 in FIG. 7. A difference lies in that in FIG. 10A and FIG. 10B, the secondary device sends the location information of the secondary device to the primary device, and the primary device determines whether the secondary device is within the preset range; if the secondary device is within the preset range, the primary device sends the multimedia content and the location information of the virtual screen to the secondary device, or the primary device sends, to the secondary device, indication information of the multimedia content, and the secondary device obtains the multimedia content based on the indication information, for example, downloads the multimedia content from a server; and in this case, the primary device does not need to send the multimedia content and the location information of the virtual screen to the server. However, in FIG. 7, the secondary device sends the location information of the secondary device to the server, and the server determines whether the secondary device is within the preset range; and if the secondary device is within the preset range, the server sends, to the secondary device, the multimedia content and the location information of the virtual screen that are provided by the primary device. For specific implementation of steps S406 to S408, refer to related descriptions of steps S202 to S204. Details are not described herein again.

Phase 3 (S411 to S417): The primary device changes conference content

S411: The primary device receives a third operation performed on the multimedia content.

S412: The primary device sends, to the secondary device, a request for obtaining location information.

S413: The secondary device sends the location information of the secondary device to the primary device.

S414: The primary device determines, based on the location information of the virtual screen and the location information of the secondary device, whether the secondary device is within the preset range.

S415: In response to the third operation, the primary device performs a fourth operation on the multimedia content.

S416: When the secondary device is within the preset range, the primary device sends, to the secondary device, information indicating the third operation.

S417: In response to the third operation, the secondary device performs the fourth operation on the multimedia content on the image captured by the camera in real time.

Steps S411, S416, and S417 are the same as steps S301, S303, and S308 in FIG. 9. For details, refer to related descriptions. Steps S412 to S415 are similar to steps S304 to S307 in FIG. 9. A difference lies in that in FIG. 10A and FIG. 10B, the primary device directly sends, to the secondary device, the request for obtaining the location information of the secondary device, the secondary device also directly sends the location information to the primary device, and the primary device determines, based on the location information of the virtual screen and the location information of the secondary device, whether the secondary device is within the preset range; if the secondary device is within the preset range, the primary device directly sends, to the secondary device, the indication information of the third operation; and there is no process in which the primary device sends the indication information to the server, and then the server forwards the indication information to the secondary device. However, in FIG. 9, the primary device sends the indication information to the server, the server sends, to the secondary device, the request for obtaining the location information, to obtain the location information of the secondary device, and the server determines whether the secondary device is within the preset range; and if the secondary device is within the preset range, the server sends, to the secondary device, the indication information of the third operation. For specific implementation of steps S412 to S415, refer to related descriptions of steps S304 to S307. Details are not described herein again.

It may be understood that the presentation method related to the primary device and the secondary device provided in this embodiment of this application may also be referred to as a communication system. The communication system includes a communication process between the primary device and the secondary device, or further includes a communication process between the server and the primary device and between the server and the secondary device. The name is not limited in embodiments of this application.

A presentation apparatus provided in embodiments of this application is described below with reference to FIG. 11.

As shown in FIG. 11, the presentation apparatus may include an obtaining module 001, a positioning module 002, a storage module 003, an operation module 004, a superimposition module 005, and a display module 006. The obtaining module 001 may be configured to obtain multimedia content, including obtaining the multimedia content from a local storage space or downloading the multimedia content from a server. In addition, the obtaining module 001 may further send the multimedia content to the storage module 003, so that the storage module 003 stores the multimedia content.

The positioning module 002 may be configured to: enable a positioning function, and obtain location information of a current location, where the location information may include location information of a virtual screen and location information of a secondary device. In addition, the positioning module 002 may further send the location information to the storage module 003, so that the storage module 003 stores the location information.

The storage module 003 may be configured to store the location information and the multimedia content.

The operation module 004 may be configured to determine, based on the location information of the virtual screen and the location information of the secondary device, whether a distance between the secondary device and the virtual screen is less than or equal to a preset value.

The superimposition module 005 may be configured to superimpose, when the distance between the secondary device and the virtual screen is less than or equal to the preset value, the multimedia content on an image captured by a camera of the secondary device in real time.

The display module 006 may be configured to display the multimedia content on a primary device and the secondary device. Different from the primary device, in addition to displaying the multimedia content, the secondary device may further display the image captured by the camera in real time, and the multimedia content is displayed at a specified location in the image. In addition, in the primary device, the display module 006 may further receive an operation performed on the multimedia content, and trigger changing of the multimedia content displayed on the primary device and the secondary device, for example, trigger switching of between a previous page and a next page of the displayed multimedia content, or pause or end playing the multimedia content.

It should be noted that, in Embodiment 1, the obtaining module 001, the positioning module 002, and the display module 006 may be modules included in both the primary device and the secondary device, and the superimposition module 005 is a module included in the secondary device. In the primary device, the obtaining module 001 may be configured to obtain the multimedia content, the positioning module 002 may be configured to determine the location of the virtual screen, and the display module 006 may be configured to display the multimedia content. In the secondary device, the obtaining module 001 may be configured to obtain the multimedia content, the positioning module 002 may be configured to: start positioning, and send location information of the secondary device to the server, the superimposition module 005 may be configured to superimpose the multimedia content on the image captured by the camera, and the display module 006 may be configured to display the superimposed image. The storage module 003 and the operation module 004 may be modules included in the server. In the server, the storage module 003 may be configured to store the multimedia content and the location of the virtual screen, and the operation module 004 may be configured to determine whether the distance between the secondary device and the virtual screen is less than the preset value. Different from Embodiment 1, in Embodiment 2, the storage module 003 and the operation module 004 may be modules included in the primary device. In the primary device, the storage module 003 may be configured to store the multimedia content and the location of the virtual screen, and the operation module 004 may be configured to determine whether the distance between the secondary device and the virtual screen is less than the preset value. For specific parts that are not mentioned in the presentation apparatus, refer to the foregoing content. Details are not described herein again.

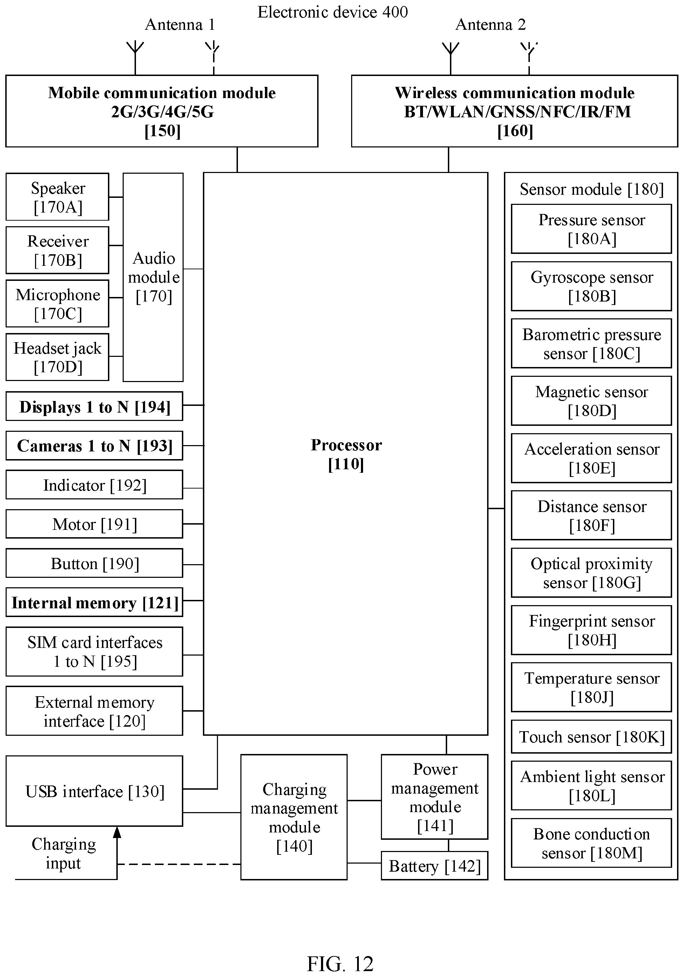

FIG. 12 is a diagram of a hardware structure of an electronic device 400.

The electronic device 400 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 400 may be the primary device mentioned above, or may be a secondary device.

The electronic device 400 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 400. In some other embodiments of this application, the electronic device 400 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 400. The charging management module 140 supplies power to the electronic device through the power management module 141 while charging the battery 142.

The power management module 141 is configured to connect to the battery 142, the charging management module 140, and the processor 110. The power management module 141 receives inputs from the battery 142 and/or the charging management module 140, and supplies power to the processor 110, the internal memory 121, the display 194, the camera 193, the wireless communication module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 400 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 400 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 400 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 400 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 400, the antenna 1 and the mobile communication module 150 are coupled, and the antenna 2 and the wireless communication module 160 are coupled, so that the electronic device 400 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 400 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be manufactured by an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light-emitting diodes (quantum dot light-emitting diodes, QLED), or the like. In some embodiments, the electronic device may include one or N displays 194, where N is a positive integer greater than 1.

The electronic device 400 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera via a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated via the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 400 may include one or N cameras 193, where N is a positive integer greater than 1.

The digital signal processor is configured to process a digital signal, and may process another digital signal in addition to the digital image signal. For example, when the electronic device 400 performs frequency selection, the digital signal processor is configured to perform Fourier transform and the like on frequency energy.

The video codec is configured to compress or decompress a digital video. The electronic device 400 may support one or more video codecs. In this way, the electronic device 400 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. The NPU may be used to implement an application like intelligent cognition of the electronic device 400, for example, image recognition, facial recognition, voice recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, such as a 5th generation DDR SDRAM, generally referred to as DDR5 SDRAM), or the like. The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like according to storage specifications.

The random access memory may be directly read and written by using the processor 110, may be configured to store executable programs (for example, machine instructions) in an operating system or another running program, and may be configured to store data of a user, data of an application, and the like.

The non-volatile memory may also store the executable programs, the data of the user and the application, and the like, and may be loaded into the random access memory in advance, to be directly read and written by the processor 110.

The external memory interface 120 may be configured to connect to an external non-volatile memory, to expand a storage capability of the electronic device 400. The external non-volatile memory communicates with the processor 110 through the external memory interface 120, to implement a data storage function. For example, files such as music and videos are stored in the external non-volatile memory.

The electronic device 400 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 400 may be used to listen to music or answer a call in a hands-free mode over the speaker 170A.

The receiver 170B, also referred to as an "earpiece", is configured to convert an electrical audio signal into a sound signal. When a call is answered or voice information is received through the electronic device 400, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 400. In some other embodiments, two microphones 170C may be disposed in the electronic device 400, to collect a sound signal and implement a noise reduction function. In some other embodiments, three, four, or more microphones 170C may alternatively be disposed in the electronic device 400, to collect a sound signal, implement noise reduction, and identify a sound source, thereby implementing a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 400 determines pressure strength based on the change of the capacitance. When a touch operation is performed on the display 194, the electronic device 400 detects intensity of the touch operation through the pressure sensor 180A. The electronic device 400 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 180B may be configured to determine a moving posture of the electronic device 400. In some embodiments, an angular velocity of the electronic device 400 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 400 jitters, calculates, based on the angle, a distance for which a lens module needs to compensate, and allows the lens to cancel the jitter of the electronic device 400 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 400 calculates altitude through the barometric pressure measured by the barometric pressure sensor 180C, to assist in positioning and navigation.

The magnetic sensor 180D includes a Hall sensor. The electronic device 400 may detect opening and closing of a flip cover by using the magnetic sensor 180D. In some embodiments, when the electronic device 400 is a flip phone, the electronic device 400 may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 400. When the electronic device 400 is static, the acceleration sensor 180E may detect magnitude and a direction of gravity. The acceleration sensor 180E may be further configured to identify a posture of the electronic device, and is used in an application like switching between a landscape mode and a portrait mode or a pedometer.

The distance sensor 180F is configured to measure a distance. The electronic device 400 may measure a distance through infrared light or a laser. In some embodiments, in a photographing scenario, the electronic device 400 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 400 emits infrared light by using the light-emitting diode. The electronic device 400 detects infrared reflected light from a nearby body by using the photodiode. When detecting sufficient reflected light, the electronic device 400 may determine that there is an object near the electronic device 400. When detecting insufficient reflected light, the electronic device 400 may determine that there is no object near the electronic device 400. The electronic device 400 may detect, by using the optical proximity sensor 180G, that a user holds the electronic device 400 close to the ear for a call, to automatically turn off a screen to save power. The optical proximity sensor 180G may also be used in a smart cover mode or a pocket mode to automatically perform screen unlocking or locking.

The ambient light sensor 180L is configured to sense ambient light brightness. The electronic device 400 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 400 is in a pocket, to avoid an accidental touch.

The fingerprint sensor 180H is configured to collect a fingerprint. The electronic device 400 may implement fingerprint unlock, application access lock, fingerprint photographing, fingerprint-based call answering, and the like by using a feature of the collected fingerprint.

The temperature sensor 180J is configured to detect a temperature. In some embodiments, the electronic device 400 executes a temperature processing policy through the temperature detected by the temperature sensor 180J. For example, when the temperature reported by the temperature sensor 180J exceeds a threshold, the electronic device 400 lowers performance of a processor nearby the temperature sensor 180J, to reduce power consumption for thermal protection. In some other embodiments, when the temperature is lower than another threshold, the electronic device 400 heats the battery 142 to avoid abnormal shutdown of the electronic device 400 caused due to the low temperature. In some still other embodiments, when the temperature is lower than still another threshold, the electronic device 400 boosts an output voltage of the battery 142 to avoid abnormal shutdown caused by the low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 400 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 400 may receive a button input, and generate a button signal input related to user setting and function control of the electronic device 400.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 400. The electronic device 400 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 400 interacts with a network by using a SIM card, to implement functions such as conversation and data communication. In some embodiments, the electronic device 400 uses an eSIM, namely, an embedded SIM card. The eSIM card may be embedded in the electronic device 400, and cannot be separated from the electronic device 400.

In this embodiment of this application, when the electronic device 400 is a primary device 100:

The mobile communication module 150 or the wireless communication module 160 may be configured to: obtain multimedia content and location information of a virtual screen; send indication information of the multimedia content and the location information of the virtual screen to another device, for example, a server or a secondary device; and after receiving an operation performed on the multimedia content, send, to the another device, information indicating the operation.

The display 194 may be configured to display the multimedia content and a related user interface related when a conference is started. For specific descriptions of the user interface, refer to related content in FIG. 3A to FIG. 3F. Details are not described herein again.

The internal memory 121 may be configured to store the multimedia content, the location information of the virtual screen, and location information of the secondary device.

In this embodiment of this application, when the electronic device 400 is a secondary device 200:

The mobile communication module 150 or the wireless communication module 160 may be configured to: obtain location information of the secondary device; send the location information of the secondary device to another device, for example, a server or a primary device; and receive multimedia content and location information of a virtual screen that are sent by the another device and information indicating an operation that is performed on the multimedia content and that is received by the primary device.

The camera 193 may be configured to capture an image of a real environment in real time.

The display 194 may be configured to display the multimedia content and a related user interface related when a conference is joined. For specific descriptions of the user interface, refer to related content in FIG. 4A to FIG. 4D. Details are not described herein again.

The electronic device may be a portable terminal device carrying iOS, Android, Microsoft, or another operating system, for example, a mobile phone, a tablet computer, or a wearable device; or may be a non-portable terminal device such as a laptop (Laptop) having a touch-sensitive surface or a touch panel, or a desktop computer having a touch-sensitive surface or a touch panel. A software system of the electronic device 400 may use a layered architecture, an event-driven architecture, a microkernel architecture, a micro service architecture, or a cloud architecture. In this embodiment of the present invention, an Android system of a layered architecture is used as an example to illustrate the software structure of the electronic device 400.

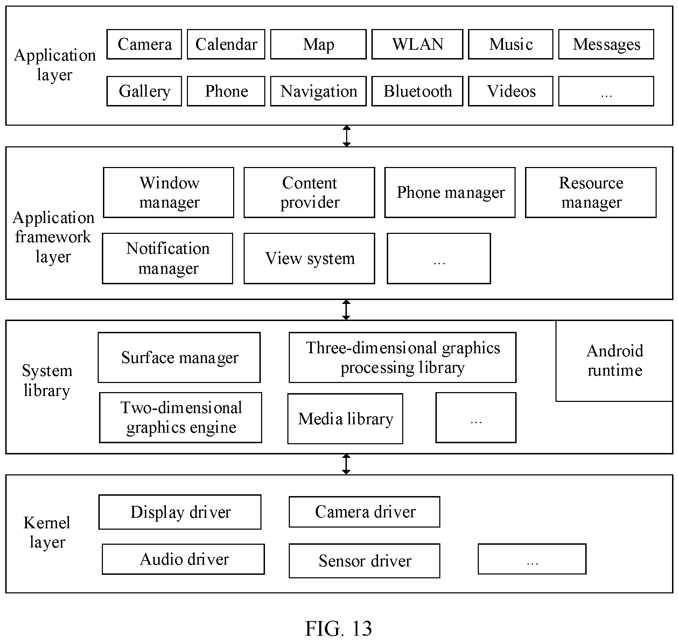

FIG. 13 is a block diagram of the software structure of the electronic device 400 according to this embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 13, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 13, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function of the electronic device 400, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem and provide fusion of 2D and 3D image layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, image layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

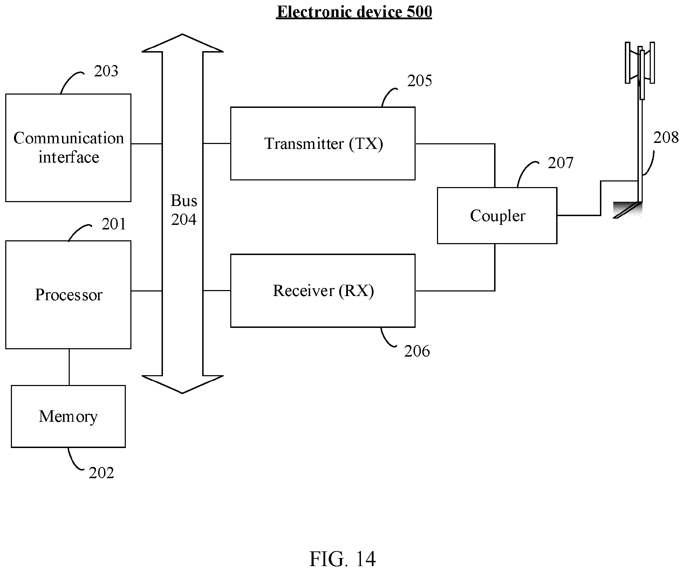

FIG. 14 is a diagram of a hardware structure of an electronic device 500 according to an embodiment of this application.

The electronic device 500 may be the server 300 in the communication system 1000 shown in FIG. 1.

As shown in FIG. 14, the electronic device 500 may include one or more processors 201, a memory 202, a communication interface 203, a transmitter 205, a receiver 206, a coupler 207, and an antenna 208. These components may be connected through a bus 204 or in another manner. In FIG. 14, an example in which the components are connected through the bus is used. The communication interface 203 may be used for the electronic device 500 and another communication device, for example, the electronic device 400.

Specifically, the communication interface 203 may be a 3G communication interface, a long term evolution (LTE) (4G) communication interface, a 5G communication interface, a WLAN communication interface, a WAN communication interface, or the like. In addition to a wireless communication interface, the electronic device 500 may be configured with a wired communication interface 203 to support wired communication. For example, a backhaul link between the electronic device 500 and the another server may be a wired communication connection.

In some embodiments of this application, the transmitter 205 and the receiver 206 may be considered as a wireless modem. The transmitter 205 may be configured to perform transmission processing on a signal output by the processor 201. The receiver 206 is configured to receive a signal. In the electronic device 500, there may be one or more transmitters 205 and receivers 206. The antenna 208 may be configured to convert electromagnetic energy in a transmission line into an electromagnetic wave in a free space, or convert an electromagnetic wave in the free space into electromagnetic energy in the transmission line. The coupler 207 may be configured to split a mobile communication signal into a plurality of signals, and distribute the plurality of signals to a plurality of receivers 206. It may be understood that the antenna 208 in the electronic device 500 may be implemented as a large-scale antenna array.

In some embodiments, the transmitter 205 may be configured to send multimedia content and location information of a virtual screen to a secondary device, or send, to the secondary device, a request for obtaining location information and information indicating an operation received by a primary device. The receiver 206 may be configured to receive the multimedia content, indication information of the multimedia content, or the location information of the secondary device.

The memory 202 is coupled to the processor 201 and configured to store various software programs and/or a plurality of groups of instructions. Specifically, the memory 202 may include a high-speed random access memory, or a non-volatile memory, for example, one or more disk storage devices, a flash storage device, or another non-volatile solid-state storage device.

The memory 202 may store an operating system (briefly referred to as a system below), for example, an embedded operating system such as uCOS, VxWorks, or RTLinux.

In some embodiments, the memory 202 may be configured to store the multimedia content, the location information of the virtual screen, the location information of the secondary device, and the like.

In this embodiment of this application, the processor 201 may be configured to read and execute computer-readable instructions. Specifically, the processor 201 may be configured to: invoke a program stored in the memory 202, for example, a program for implementing, on the electronic device 500 side, access policy configuration provided in one or more embodiments of this application; and execute instructions included in the program.

In some embodiments, the processor 201 may be configured to calculate, based on the location information of the virtual screen and the location information of the secondary device, whether a distance between the secondary device and the virtual screen is less than or equal to a preset value.

It should be noted that the electronic device 500 shown in FIG. 14 is merely an implementation of embodiments of this application. In actual application, the electronic device 500 may further include more or fewer components. This is not limited herein.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the electronic device 400 or the electronic device 500 in any one of the foregoing embodiments.

This application further provides a chip system. The chip system includes at least one processor, configured to implement functions in the method performed by the electronic device 400 or the electronic device 500 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory memory, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform the method performed by the electronic device 400 or the electronic device 500 in any one of the foregoing embodiments.

This application further provides a computer-readable storage medium. The computer-readable storage medium stores a computer program (which may also be referred to as code or instructions). When the computer program is run, a computer is enabled to perform the method performed by the electronic device 400 or the electronic device 500 in any one of the foregoing embodiments.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the methods in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

The implementations of this application may be randomly combined to achieve different technical effect.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing relevant hardware. The program may be stored in a computer-readable storage medium. When the program runs, the procedures of the methods in embodiments are performed. The foregoing storage medium includes any medium that can store program code, like a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

**Claims**

1.  A communication system, wherein the system comprises a first device and a second device;

    the first device is configured to receive a first operation;
    the first device is further configured to display first content in response to the first operation;
    the second device is configured to obtain the first content when the second device is within a preset range of a first location, wherein the first location is a location, in a physical space, determined by the first device; and
    the second device is further configured to display the first content in a superimposing manner on an image captured by a camera in real time, wherein a display location of the first content in the image overlaps the first location in the image; or the second device is further configured to project the first content onto a retina of a user via a lens of the second device, so that the first content is superimposed on the first location viewed by the user via the lens.

2.  The system according to claim 1, wherein the system further comprises a server, and before the second device obtains the first content when the second device is within the preset range of the first location,

    the first device is further configured to send indication information of the first content to the server;
    the second device is further configured to: receive a second operation, and send a location of the second device to the server;
    the server is configured to determine, based on the location of the second device, that the second device is within the preset range of the first location, and sending the indication information to the second device; and
    the second device is further configured to obtain the first content based on the indication information.

3.  The system according to claim 1, wherein

    the second device is further configured to: receive a second operation, and send a location of the second device to the first device;
    the first device is further configured to: determine, based on the location of the second device, that the second device is within the preset range of the first location, and send indication information to the second device; and
    the second device is further configured to obtain the first content based on the indication information.

4.  The system according to any one of claims 1 to 3, wherein after the first device displays the first content,

    the first device is further configured to receive a third operation on the first content; and
    in response to the third operation, the first device is further configured to perform a fourth operation on the first content, wherein the fourth operation comprises any one of the following: switching a display picture of the first content, ending displaying the first content, pausing playing the first content, or starting playing the first content.

5.  The system according to claim 4, wherein after the second device displays the first content in the superimposing manner on the image captured by the camera in real time, or after the second device projects the first content onto the retina of the user via the lens of the second device,

    the first device is further configured to send, to the second device, first information indicating the third operation; and
    the second device is further configured to perform the fourth operation on the first content.

6.  The system according to claim 5, wherein
    when the second device is within the preset range of the first location, the first device is further configured to send, to the second device, the first information indicating the third operation.

7.  The system according to any one of claims 1 to 6, wherein the first location comprises one or more locations, and the second device comprises one or more devices.

8.  The system according to any one of claims 1 to 7, wherein the first location is a location obtained when the first device or a third device starts positioning, and the third device is a device that is in the physical space and that is different from the first device or the second device; or the first location is a location pre-stored in the first device or the server.

9. The system according to any one of claims 1 to 8, wherein before the second device displays the first content in the superimposing manner on the image captured by the camera in real time, or before the second device projects the first content onto the retina of the user via the lens of the second device,

   the second device is further configured to display first prompt information, wherein the first prompt information indicates the second device to deflect toward a first direction, and the first direction points from the second device to the first location.

10. The system according to any one of claims 1 to 9, wherein the first device and the second device are located in a same physical space, or the first device and the second device are located in different physical spaces.

11. A presentation method, wherein the method is applied to a first device, and the method comprises:

   receiving, by the first device, a first operation;
   displaying, by the first device, first content in response to the first operation; and
   sending, by the first device, the first content to a second device when the second device is within a preset range of a first location, wherein the first location is a location, in a physical space, determined by the first device.

12. The method according to claim 11, wherein the sending, by the first device, the first content to a second device when the second device is within a preset range of a first location specifically comprises:

   sending, by the first device, indication information of the first content to a server, so that the server sends the indication information to the second device when the second device is within the preset range of the first location, wherein the indication information is used by the second device to obtain the first content; or
   obtaining, by the first device, a location of the second device; and determining, by the first device based on the location of the second device, that the second device is within the preset range of the first location, and sending the indication information to the second device.

13. The method according to claim 11 or 12, wherein after the displaying, by the first device, first content, the method further comprises:

   receiving, by the first device, a third operation on the first content; and
   in response to the third operation, performing, by the first device, a fourth operation on the first content, wherein the fourth operation comprises any one of the following: switching a display picture of the first content, ending displaying the first content, pausing playing the first content, or starting playing the first content.

14. The method according to any one of claims 11 to 13, wherein the method further comprises: sending, by the first device to the second device, first information indicating the third operation, wherein the first information is used to trigger the second device to perform the fourth operation on the first content.

15. The method according to claim 14, wherein the sending, by the first device to the second device, first information indicating the third operation specifically comprises:
   when the second device is within the preset range of the first location, sending, by the first device to the second device, the first information indicating the third operation.

16. The method according to any one of claims 11 to 15, wherein the first location comprises one or more locations, and the second device comprises one or more devices.

17. The method according to any one of claims 11 to 16, wherein the first location is a location obtained when the first device or a third device starts positioning, and the third device is a device that is in the physical space and that is different from the first device or the second device; or the first location is a location pre-stored in the first device or the server.

18. The method according to any one of claims 11 to 17, wherein the first device and the second device are located in a same physical space, or the first device and the second device are located in different physical spaces.

19. A presentation method, wherein the method is applied to a second device, and the method comprises:

   obtaining, by the second device when the second device is within a preset range of a first location, first content to be displayed on a first device, wherein the first location is a location, in a physical space, determined by the first device; and

displaying, by the second device, the first content in a superimposing manner on an image captured by a camera in real time, wherein a display location of the first content in the image overlaps the first location in the image; or projecting, by the second device, the first content onto a retina of a user via a lens of the second device, so that the first content is superimposed on the first location viewed by the user via the lens.

20. The method according to claim 19, wherein the obtaining, by the second device, first content when the second device is within a preset range of a first location specifically comprises:

receiving, by the second device, a second operation, and sending a location of the second device to a server; and when the second device is within the preset range of the first location, obtaining, by the second device, indication information sent by the server; or

receiving, by the second device, a second operation, and sending a location of the second device to the first device; and when the second device is within the preset range of the first location, obtaining, by the second device, indication information sent by the first device; and

obtaining, by the second device, the first content based on the indication information.

21. The method according to claim 19 or 20, wherein after the displaying, by the second device, the first content in a superimposing manner on an image captured by a camera in real time, or after the projecting, by the second device, the first content onto a retina of a user via a lens of the second device, the method further comprises:

obtaining, by the second device, first information, indicating a third operation, sent by the first device, wherein the third operation is an operation, on the first content, received by the first device; and

performing, by the second device, a fourth operation on the first content, wherein the fourth operation comprises any one of the following: switching a display picture of the first content, ending displaying the first content, pausing playing the first content, or starting playing the first content.

22. The method according to claim 21, wherein the obtaining, by the second device, first information sent by the first device specifically comprises:
when the second device is within the preset range of the first location, obtaining, by the second device, the first information sent by the first device.

23. The method according to any one of claims 19 to 22, wherein the first location comprises one or more locations, and the second device comprises one or more devices.

24. The method according to any one of claims 19 to 23, wherein the first location is a location obtained when the first device or a third device starts positioning, and the third device is a device that is in the physical space and that is different from the first device or the second device; or the first location is a location pre-stored in the first device or the server.

25. The method according to any one of claims 19 to 24, wherein before the displaying, by the second device, the first content in a superimposing manner on an image captured by a camera in real time, or before the projecting, by the second device, the first content onto a retina of a user via a lens of the second device, the method further comprises: displaying, by the second device, first prompt information, wherein the first prompt information indicates the second device to deflect toward a first direction, and the first direction points from the second device to the first location.

26. The method according to any one of claims 19 to 25, wherein the first device and the second device are located in a same physical space, or the first device and the second device are located in different physical spaces.

27. An electronic device, comprising a memory, one or more processors, and one or more programs, wherein when the one or more processors execute the one or more programs, the electronic device is enabled to implement the method according to any one of claims 11 to 18.

28. An electronic device, comprising a memory, one or more processors, and one or more programs, wherein when the one or more processors execute the one or more programs, the electronic device is enabled to implement the method according to any one of claims 19 to 26.

29. A computer-readable storage medium, comprising instructions, wherein when the instructions are run on an electronic device, the electronic device is enabled to perform the method according to any one of claims 11 to 18; or when the instructions are run on an electronic device, the electronic device is enabled to perform the method according to any one of claims 19 to 26.

30. A computer program product, wherein when the computer program product runs on a computer, the computer is enabled to perform the method according to any one of claims 11 to 18; or
when the computer program product runs on a computer, the computer is enabled to perform the method according to any one of claims 19 to 26.

FIG. 1

**Communication system 1000**

FIG. 2

**User interface 1-1**

FIG. 3A

User interface 1-1

FIG. 3B

User interface 1-1

FIG. 3C

**User interface 1-1**

FIG. 3D

User interface 1-2

Statistical table from January to April

121

122B     122D

122

122A     122C

FIG. 3E

User interface 1-2

Statistical table from May to August

FIG. 3F

EP 4 503 596 A1

**User interface 2-1**

212

Conference

213    Join the conference

214    Create a conference

211

FIG. 4A

**User interface 2-1**

A camera is starting up...  08:08

Conference

215

Join the conference

Create a conference

FIG. 4B

42

**User interface 2-2**

Statistical table from
January to April

FIG. 4C

**User interface 2-2**

Statistical table from
May to August

FIG. 4D

FIG. 5

Server

Secondary
device

S201: Receive a
second operation of
joining a conference

S202: Send location information of
the secondary device to the server

S203: Determine, based on indication information of
multimedia content and the location information of
the secondary device, whether the secondary device
is within a preset range

S204: When the secondary device is
within the preset range, send the
multimedia content and location
information of a virtual screen to the
secondary device

S205: Start up a camera

S206: Display, in a superimposing manner based on the
location information of the virtual screen, the multimedia
content on an image captured by the camera in real time

FIG. 7

FIG. 8

```
        ┌─────────┐              ┌─────────┐              ┌─────────┐
        │ Primary │              │  Server │              │Secondary│
        │ device  │              │         │              │ device  │
        └─────────┘              └─────────┘              └─────────┘

S301: Receive a
third operation
performed on
multimedia content
─────────────────►│

        S302: In response to the third
          operation, perform a fourth
      operation on the multimedia content


       S303: Send, to the server,         S304: Send, to the
        information indicating             secondary device, a
          the third operation             request for obtaining
                                           location information

                                          S305: Send location
                                           information of the
                                          secondary device to
                                               the server

          S306: Determine, based on location
      information of a virtual screen and the location
      information of the secondary device, whether
      the secondary device is within a preset range

                                          S307: When the
                                        secondary device is
                                         within the preset
                                         range, send, to the
                                        secondary device, the
                                        information indicating
                                            the operation

                                    S308: In response to the third operation,
                                      perform the fourth operation on the
                                    multimedia content on an image captured
                                         by a camera in real time
```

FIG. 9

```
┌──────────┐                                    ┌──────────┐
│ Primary  │                                    │Secondary │
│ device   │                                    │ device   │
└──────────┘                                    └──────────┘
```

S401: Obtain multimedia content

S402: Receive a
first operation of
playing the
multimedia content

S403: Obtain location information of a virtual screen

S404: Play the multimedia content
in response to the first operation

S405: Receive a
second operation
of joining a
conference

S406: Send location information of the
secondary device to the primary device

S407: Determine, based on the location information of the
virtual screen and the location information of the secondary
device, whether the secondary device is within a preset range

S408: When the secondary device is within
the preset range, send the multimedia content
and the location information of the virtual
screen to the secondary device

S409: Start up a camera

S411: Receive a
third operation
performed on the
multimedia
content

S410: Display, in a superimposing manner
based on the location information of the
virtual screen, the multimedia content on an
image captured by the camera in real time

S412: Send, to the secondary device, a
request for obtaining location information

TO
FIG. 10B

TO
FIG. 10B

FIG. 10A

48

CONT.
FROM
FIG. 10A

CONT.
FROM
FIG. 10A

S413: Send the location information of the
secondary device to the primary device

S414: Determine, based on the location
information of the virtual screen and the location
information of the secondary device, whether the
secondary device is within the preset range

S415: In response to the third operation, perform
a fourth operation on the multimedia content

S416: When the secondary device is within the
preset range, send, to the secondary device,
information indicating the third operation

S417: In response to the third operation, perform
the fourth operation on the multimedia content
on the image captured by the camera in real time

FIG. 10B

| Obtaining module | Positioning module | Storage module | Operation module | Superimposition module | Display module |
|---|---|---|---|---|---|

001          002          003          004          005          006

FIG. 11

Electronic device 400

Antenna 1        Antenna 2

**FIG. 12**

| Application layer | Camera | Calendar | Map | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... | |

| Kernel layer | Display driver | Camera driver |
|---|---|---|
| | Audio driver | Sensor driver | ... |

FIG. 13

Electronic device 500

Communication interface 203

Processor 201

Memory 202

Bus 204

Transmitter (TX) 205

Receiver (RX) 206

Coupler 207

208

FIG. 14

**INTERNATIONAL SEARCH REPORT**

International application No.

**PCT/CN2023/087858**

| A. | CLASSIFICATION OF SUBJECT MATTER |
|---|---|

H04N7/15(2006.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, WOTXT, USTXT: 会议, 远程, 远端, 增强现实, 虚拟, 屏幕, 显示, 多媒体, 演示内容, 桌面, 叠加, 实时, 现实, 范围, 区域, 位置, conference, remote, AR, virtual, screen, display, multimedia, PPT, desktop, add, combination, current, range, area, location

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112235530 A (NETEASE (HANGZHOU) NETWORK CO., LTD.) 15 January 2021 (2021-01-15) description, paragraphs 0089-0137 | 1-30 |
| Y | WO 2022088918 A1 (BEIJING BYTEDANCE NETWORK TECHNOLOGY CO., LTD.) 05 May 2022 (2022-05-05) description, paragraphs 0055-0110 and 0185-0189 | 1-30 |
| A | CN 102263772 A (CYBER CLASSICS TECHNOLOGIES (BEIJING) CO., LTD.) 30 November 2011 (2011-11-30) entire document | 1-30 |
| A | CN 108022306 A (HNAC TECHNOLOGY CO., LTD.) 11 May 2018 (2018-05-11) entire document | 1-30 |
| A | CN 113778218 A (SHANGHAI BILIBILI TECHNOLOGY CO., LTD.) 10 December 2021 (2021-12-10) entire document | 1-30 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 July 2023** | **12 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="3">INTERNATIONAL SEARCH REPORT</td><td>International application No.<br>**PCT/CN2023/087858**</td></tr>
</table>

| C. | DOCUMENTS CONSIDERED TO BE RELEVANT | | |
|---|---|---|---|
| Category* | Citation of document, with indication, where appropriate, of the relevant passages | | Relevant to claim No. |
| A | JP 2017084100 A (CANON K. K.) 18 May 2017 (2017-05-18)<br>entire document | | 1-30 |

Form PCT/ISA/210 (second sheet) (July 2022)

Form PCT/ISA/210 (patent family annex) (July 2022)

**INTERNATIONAL SEARCH REPORT**
Information on patent family members

International application No.

**PCT/CN2023/087858**

| Patent document cited in search report | | | Publication date (day/month/year) | Patent family member(s) | | | Publication date (day/month/year) |
|---|---|---|---|---|---|---|---|
| CN | 112235530 | A | 15 January 2021 | None | | | |
| WO | 2022088918 | A1 | 05 May 2022 | None | | | |
| CN | 102263772 | A | 30 November 2011 | None | | | |
| CN | 108022306 | A | 11 May 2018 | None | | | |
| CN | 113778218 | A | 10 December 2021 | None | | | |
| JP | 2017084100 | A | 18 May 2017 | JP | 6632322 | B2 | 22 January 2020 |

## REFERENCES CITED IN THE DESCRIPTION

**Patent documents cited in the description**

- CN 202210415946